# EUROPEAN PATENT APPLICATION

(11) **EP 4 701 314 A1**
(43) Date of publication of application: **25.02.2026**
(21) Application number: 24800292.5
(22) Date of filing: 16.04.2024
(51) Int. Cl.: H04W 74/00, H04L 27/26, H04W 74/0833, H04W 56/00, H04W 88/08, H04L 5/00, H04L 41/0895

(54) **DEVICE AND METHOD FOR IDENTIFYING RANDOM ACCESS SIGNAL IN FRONTHAUL INTERFACE**

(30) Priority: 04.05.2023 KR 20230058782; 04.05.2023 KR 20230058783; 24.07.2023 KR 20230096429; 06.09.2023 KR 20230118668
(71) Applicant: Samsung Electronics Co., Ltd., Suwon-si, Gyeonggi-do 16677 (KR)
(72) Inventor: WANG, Jinsoo, Suwon-si, Gyeonggi-do 16677 (KR); KANG, Hyoseung, Suwon-si, Gyeonggi-do 16677 (KR); KIM, Joonki, Suwon-si, Gyeonggi-do 16677 (KR); BAE, Byungwon, Suwon-si, Gyeonggi-do 16677 (KR); BAIK, Kyungjin, Suwon-si, Gyeonggi-do 16677 (KR); OH, Jongho, Suwon-si, Gyeonggi-do 16677 (KR); HONG, Kiseob, Suwon-si, Gyeonggi-do 16677 (KR)
(74) Representative: Gulde & Partner
(86) International application number: PCT/KR2024/095747
(87) International publication number: WO 2024/228612

(57) **Abstract**

A device of a radio unit (RU) can comprise a transceiver, at least one processor, and a memory for storing instructions. The instructions, when executed individually or collectively by the at least one processor, can cause the device to: acquire, from a distributed unit (DU), a control plane message comprising extension type information for detecting a random access preamble; and transmit, to the DU, an uplink message comprising information about random access preambles. The random access preambles can be detected on the basis of the extension type information. The extension type information can comprise indication information for detection random access preambles, and information about the maximum number of reporting random access preambles.

## Description

### [Technical Field]

The present disclosure relates to a device and a method for identifying a random access signal in a fronthaul interface.

### [Background Art]

As transmission capacity increases in wireless communication systems, a function split for functionally separating a base station is being applied. According to the function split, the base station may be separated into a distributed unit (DU) and a radio unit (RU). A fronthaul interface is defined for communication between the DU and the RU.

### [Disclosure]

### [Technical Solution]

According to embodiments, a radio unit (RU) may comprise a transceiver. The RU may comprise a processor. The RU may comprise memory. Instructions stored in the memory, when executed by the processor, may cause the RU to obtain, from a distributed unit (DU), a control plane message including extension type information for detection of a random access preamble. The instructions stored in the memory, when executed by the processor, may cause the RU to transmit, to the DU, an uplink message including information on random access preambles. The random access preambles may be detected based on the extension type information. The extension type information may include indication information for detection random access preambles and information on a maximum number of reporting random access preambles.

In embodiments, a distributed unit (DU) may comprise a transceiver. The DU may comprise a processor. The DU may comprise memory. Instructions stored in the memory, when executed by the processor, may cause the DU to transmit, to a radio unit (RU), a control plane message including extension type information for detection of a random access preamble. The instructions stored in the memory, when executed by the processor, may cause the DU to obtain, from the RU, an uplink message including information on random access preambles. The random access preambles may be detected, based on the extension type information. The extension type information may include indication information for detection random access preambles and information on a maximum number of reporting random access preambles.

In embodiments, a method performed by a radio unit (RU) may comprise obtaining, from a distributed unit (DU), a control plane message including extension type information for detection of a random access preamble. The method may comprise transmitting, to the DU, an uplink message including information on random access preambles. The random access preambles may be detected based on the extension type information. The extension type information may include indication information for detection random access preambles and information on a maximum number of reporting random access preambles.

In embodiments, a non-transitory computer-readable storage medium, when executed by at least one processor of a device for a radio unit (RU) comprising a transceiver, may store one or more programs including instructions that cause the RU to obtain, from a distributed unit (DU), a control plane message including extension type information for detection of a random access preamble. The non-transitory computer-readable storage medium, when executed by the at least one processor, may store one or more programs including instructions that cause the RU to transmit, to the DU, an uplink message including information on random access preambles, The random access preambles may be detected based on the extension type information. The extension type information may include indication information for detection random access preambles and information on a maximum number of reporting random access preambles.

### [Description of the Drawings]

FIG. 1 illustrates an example of a wireless communication system.
FIG. 2A illustrates an example of a fronthaul interface.
FIG. 2B illustrates an example of a fronthaul interface of an open-radio access network (O-RAN).
FIG. 3A illustrates an example of a functional configuration of a distributed unit (DU).
FIG. 3B illustrates an example of a functional configuration of a radio unit (RU).
FIG. 4 illustrates an example of a function split between a DU and a RU.
FIG. 5A illustrates an example of a method in which a DU detects a random access signal based on a designated function split.
FIG. 5B illustrates an example of a method in which a RU detects a random access signal based on a designated function split.
FIG. 6A illustrates an example of an extension type for detection of a random access preamble.
FIG. 6B illustrates an example of an extension type for detection of a random access preamble.
FIG. 7 illustrates an example of an extension type for detection of a random access preamble.
FIGS. 8A and 8B illustrate an example of a control plane message including detection result of a random access preamble.
FIGS. 9A to 9D illustrate an example of a user plane message including detection result of a random access preamble.
FIG. 10A illustrates an example of a transmission window for an uplink message.
FIG. 10B illustrates an example of a signal flow for transmitting an uplink message.
FIG. 11 illustrates an example of an operation flow for a method of reporting detection result based on extension type information for detection of a random access preamble.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signal (e.g., packet, message, signal, information, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes embodiments using terms used in some communication standards (e.g., 3rd Generation Partnership Project (3GPP)), these are only examples for explanation. The embodiments of the present disclosure may be applied to other communication systems and broadcast systems.

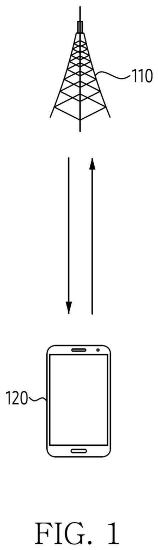

FIG. 1 illustrates an example of a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

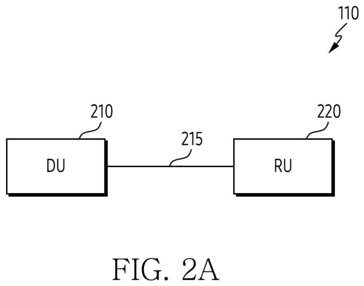

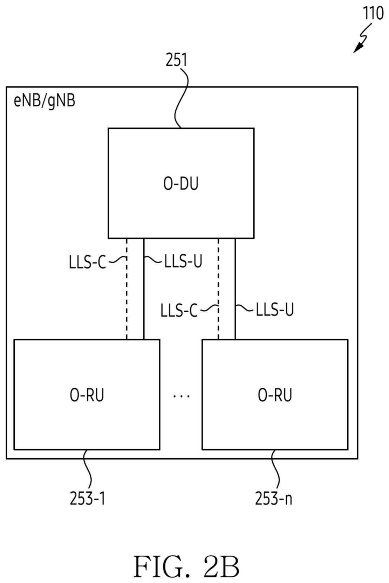

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates an example of a fronthaul interface. Unlike a backhaul between a base station and a core network, the fronthaul refers to a section between entities between a radio access network (RAN) and a base station.

FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the digital unit (DU) 210 may be implemented by being separated into a centralized unit (CU) (or a control unit (CU)) and a distributed unit (DU). Between a core (e.g., 5G core (5GC) or next generation core (NGC)) network and a radio access network (RAN), the base station may be implemented in a structure in which centralized unit (CU), distributed unit (DU), and radio unit (RU) are arranged in order. An interface between the centralized unit (CU) and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates an example of a fronthaul interface of an open-radio access network (O-RAN). In the FIG. 2B, eNB or gNB is exemplified as a base station 110 according to distributed deployment.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

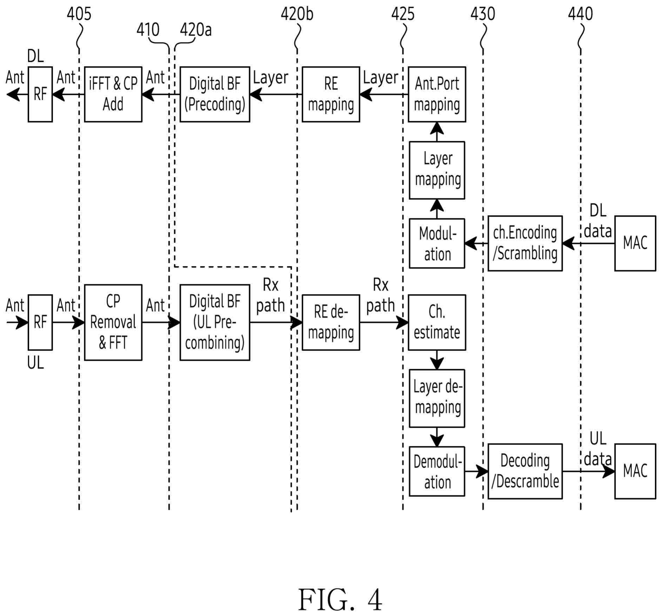

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described later, operations of the DU 210 may also be performed by the O-DU 251. A description of the DU 210 may be applied to the O-DU 251. Likewise, in embodiments described later, operations of the RU 220 may also be performed by the O-RU 253-1. A description of the RU 220 may be applied to the O-RU 253-1.

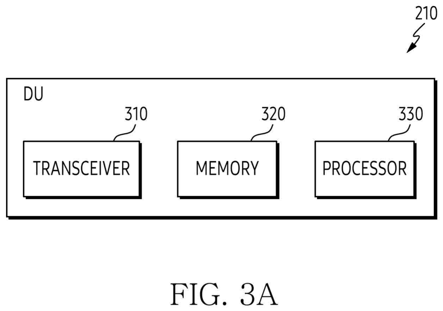

FIG. 3A illustrates an example of a functional configuration of a distributed unit (DU).

A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

For example, the processor 330 may include various processing circuitry and/or a plurality of processors. For example, the term "processor" used herein, including in the scope of claims, may include various processing circuitry including at least one processor, and one or more of the at least one processor may be configured to perform individually and/or collectively, in a distributed manner, various functions described below. As used hereinafter, in a case that the terms "processor", "at least one processor", and "one or more processors" are described as being configured to perform various functions, these terms encompass, without limitation, situations in which a processor performs a portion of cited functions and another processor(s) performs another portion(s) of the cited functions, as well as situations in which a processor may perform all of the cited functions. Additionally, the at least one processor may include a combination of processors performing the listed/disclosed various functions in a distributed manner. The at least one processor may execute program instructions to achieve or perform various functions.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

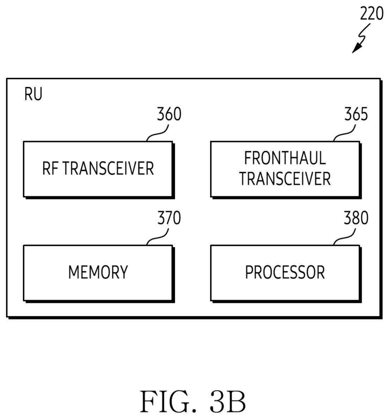

FIG. 3B illustrates an example of a functional configuration of a radio unit (RU).

A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

For example, the processor 380 may include various processing circuitry and/or a plurality of processors. For example, the term "processor" used herein, including in the scope of claims, may include various processing circuitry including at least one processor, and one or more of the at least one processor may be configured to perform individually and/or collectively, in a distributed manner, various functions described below. As used hereinafter, in a case that the terms "processor", "at least one processor", and "one or more processors" are described as being configured to perform various functions, these terms encompass, without limitation, situations in which a processor performs a portion of cited functions and another processor(s) performs another portion(s) of the cited functions, as well as situations in which a processor may perform all of the cited functions. Additionally, the at least one processor may include a combination of processors performing the listed/disclosed various functions in a distributed manner. The at least one processor may execute program instructions to achieve or perform various functions.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split 405 is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations described below may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

The Open Radio Access Network (O RAN) is an organization that establishes a standard for a fronthaul interface between a DU and a RU according to various function split structures, and provides a standardized interface in a split architecture (e.g., a 7-2x function split structure) applying Ethernet.

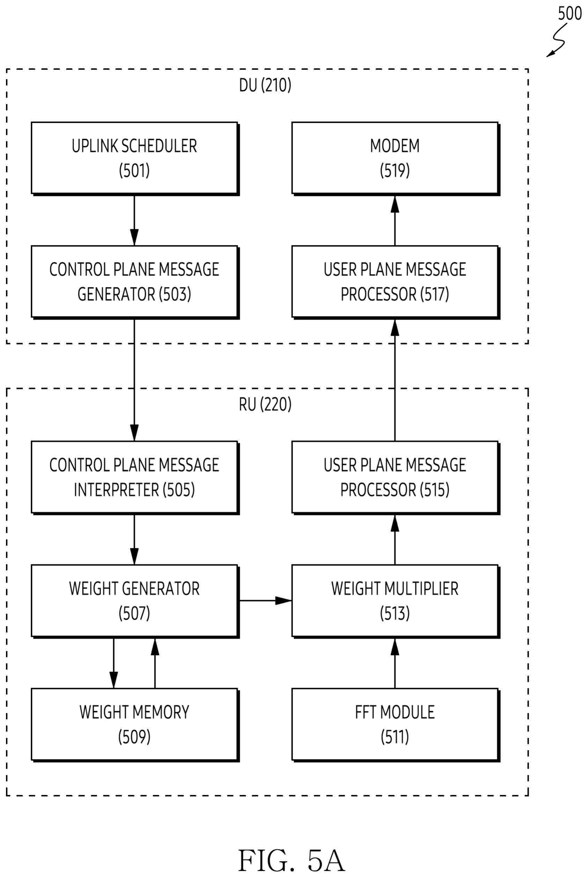

FIG. 5A illustrates an example of a method in which a DU detects a random access signal based on a designated function split.

FIG. 5A illustrates an example 500 for a method in which the DU 210 detects a random access signal based on the third function split 420a (or the fourth function split 420b) of FIG. 4. For example, the random access signal may include a random access preamble. For example, the random access preamble may be referred to as a preamble or a physical random access channel (PRACH). For example, the random access preamble may be included in message 1 (MSG1).

Referring to the example 500, the DU 210 may include a plurality of components. For example, the plurality of components of the DU 210 may include an uplink scheduler (UL scheduler) 501, a control plane message generator (C-plane Msg generator) 503, a user plane message processor (U-plane Msg processor) 517, and a modulator and demodulator (MODEM) 519. The plurality of components of the DU 210 illustrated in the example 500 may be implemented by hardware, software, or a combination of hardware and software.

In addition, referring to an example, the RU 220 may include a plurality of components. For example, the plurality of components of the RU 220 may include a control plane message interpreter (C-plane Msg interpreter) 505, a weight generator 507, a weight memory 509, a fast Fourier transform (FFT) module 511, a weight multiplier 513 (or pre-combining module), and a user plane message processor 515. The plurality of components of the RU 220 illustrated in the example 550 may be implemented by hardware, software, or a combination of hardware and software. For example, the RU 220 may be referred to as a massive multiple input multiple output (MIMO) unit (MMU).

Referring to FIG. 5A, the DU 210 may generate, through the control plane message generator 503, a control plane message based on scheduling information provided from the UL scheduler 501. For example, the DU 210 may transmit (or provide) the generated control plane message to the RU 220.

For example, the RU 220 may identify configuration information based on the received (or obtained) control plane message through the control plane message interpreter 505. For example, the RU 220 may identify a scheduling beam index through the weight generator 507, based on the control plane message. For example, the RU 220 may identify a weight corresponding to the scheduling beam index through the weight memory 509. In addition, the RU 220 may receive the random access preamble from a user equipment (not illustrated). For example, the RU 220 may receive a message including the random access preamble from the user equipment. For example, the RU 220 may perform an FFT for the random access preamble through the FFT module 511. For example, the RU 220 may perform pre-combining through the weight multiplier 513, based on an output of the FFT module 511 and the weight. At this time, the pre-combining may include an operation of reducing a number of paths, by grouping antenna ports. The RU 220 may generate in-phase and quadrature phase (IQ) data for the random access preamble and generate a user plane message for the IQ data, through the user plane message processor 515. For example, the RU 220 may transmit (or provide) the generated user plane message to the DU 210.

For example, the DU 210 may process the received (or obtained) user plane message through the user plane message processor 517. For example, the DU 210 may identify the IQ data for the PRACH from the user plane message. The DU 210 may perform PRACH detection, based on the IQ data, through the modem 519. For example, the PRACH detection may include identifying a specific random access preamble used for performing communication with the user equipment. Based on the specific random access preamble, a random access procedure may be performed. For example, based on the specific random access preamble, a message 2 (MSG2) may be transmitted from the RU 220 to the user equipment. For example, the message 2 may be referred to as a random access response (RAR).

Referring to the example 500 of FIG. 5A, without performing detection of information on the random access preamble received from the user equipment, the RU 220 may convert it to IQ data, and provide the converted IQ data to the DU 210 through a user plane message. The DU 210 may perform PRACH detection based on the user plane message. At this time, a designated resource region may be required for the RU 220 to provide the user plane message to the DU 210. For example, in a case that the random access preamble is a long preamble, 72 resource blocks (RBs) may be required. In other words, transmitting the user plane message from the RU 220 to the DU 210 through the fronthaul 215 (e.g., eCPRI) may cause a capacity limitation of the fronthaul 215. In addition, since the detection for the random access preamble is performed in the DU 210, the number of targets to be processed by the DU 210 increases, and thus a processing time for the random access increases, and a long time may be required to complete the random access.

Hereinafter, the present disclosure proposes a method in which the RU 220 receives a random access preamble (or a random access signal) for performing signal synchronization and detects the random access preamble. Detecting the random access preamble may include identifying an index of a specific random access preamble and identifying accordingly a timing advance (TA). As the RU 220 provides, to the DU 210, information on the detection random access preamble, a device and a method according to the embodiments of the present disclosure may reduce a processing time of the DU 210 and perform a random access procedure more quickly. The random access procedure being performed relatively quickly may indicate shortening a call connection delay time.

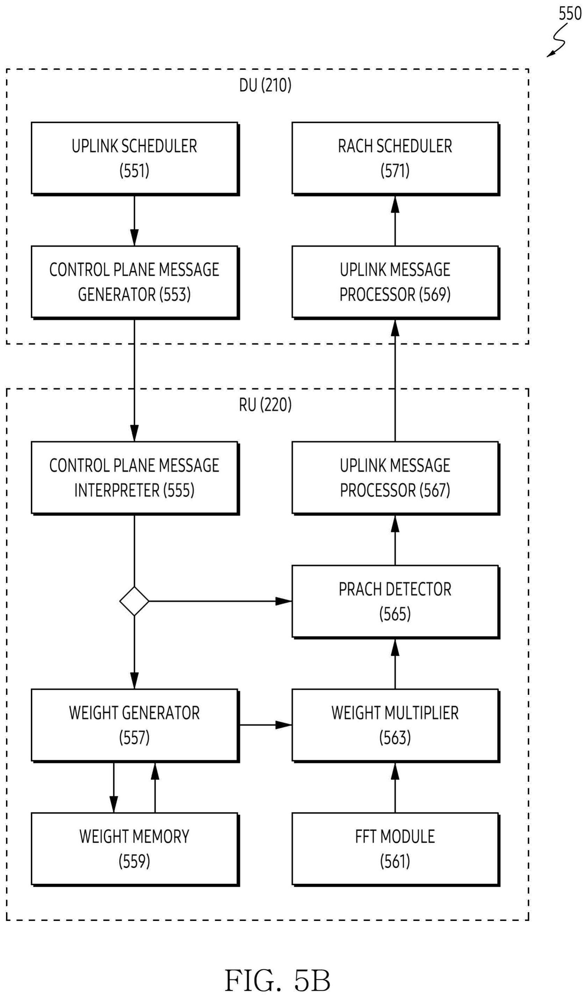

FIG. 5B illustrates an example of a method in which a RU detects a random access signal based on a designated function split.

FIG. 5B illustrates an example 550 of a method in which the RU 220 detects the random access signal based on the sixth function split 430 of FIG. 4. However, embodiments of the present disclosure are not limited thereto. For example, the embodiments of the present disclosure may also be applied to a function split that is substantially identical to the sixth function split 430 in addition to the sixth function split 430.

Referring to the example 550, the DU 210 may include a plurality of components. For example, the plurality of components of the DU 210 may include an uplink scheduler 551, a control plane message generator 553, an uplink message processor (U-plane Msg processor) 569, and a RACH scheduler 571. For example, the uplink message may include a user plane message and a control plane message. For example, the RACH scheduler 571 may be included in the modem 519 of the example 500. The plurality of components of the DU 210 illustrated in the example 550 may be implemented by hardware, software, or a combination of hardware and software.

In addition, referring to an example, the RU 220 may include a plurality of components. For example, the plurality of components of the RU 220 may include a control plane message interpreter 555, a weight generator 557, a weight memory 559, a fast Fourier transform (FFT) module 561, a weight multiplier 563 (or a pre-combining module), a PRACH detector 565, and an uplink message processor 567. For example, the uplink message may include a user plane message and a control plane message. The plurality of components of the RU 220 illustrated in the example 550 may be implemented by hardware, software, or a combination of hardware and software. For example, the RU 220 may be referred to as a massive multiple input multiple output (MIMO) unit (MMU).

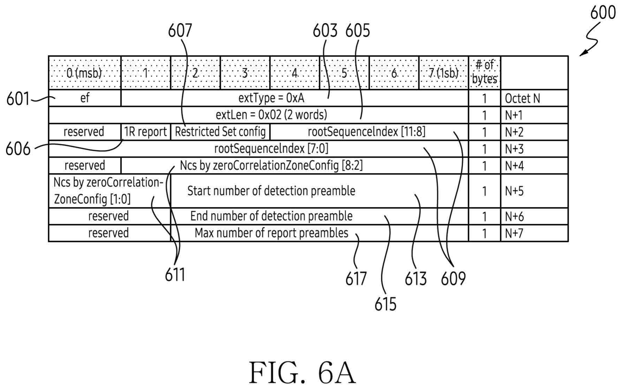

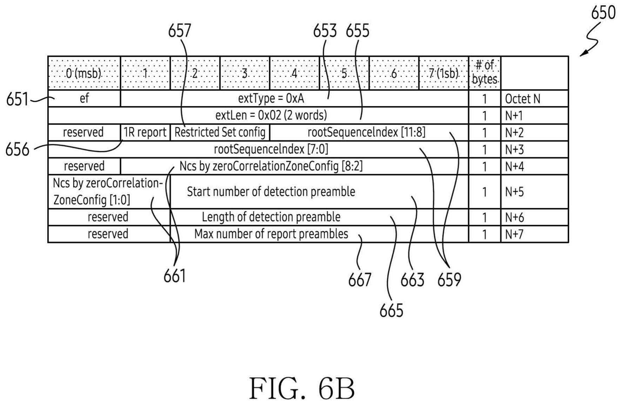

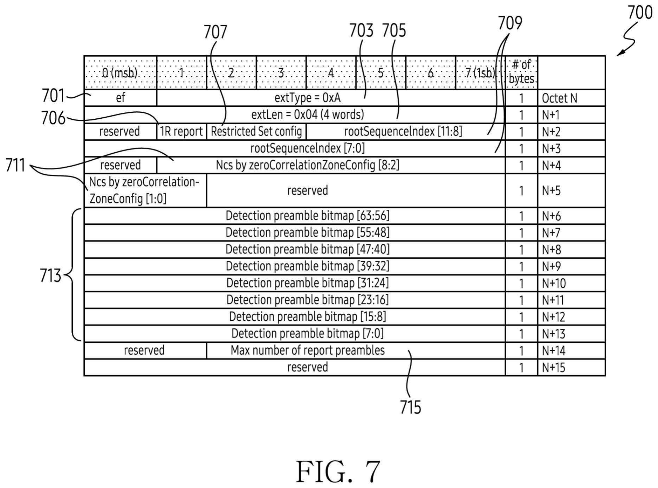

Referring to FIG. 5B, the DU 210 may generate a control plane message through the control plane message generator 553, based on scheduling information provided from the UL scheduler 551. For example, the DU 210 may transmit (or provide) the generated control plane message to the RU 220. For example, the control plane message may include extension type information used for the RU 220 to perform detection for a random access preamble. For example, the extension type information may be used in concatenation with a section type associated with the control plane message. For example, the extension information may be used for a specific section type. For example, the extension type information may include information for detecting the random access preamble. The extension type information for detecting the random access preamble is specifically described below in FIGS. 6A, 6B, and 7.

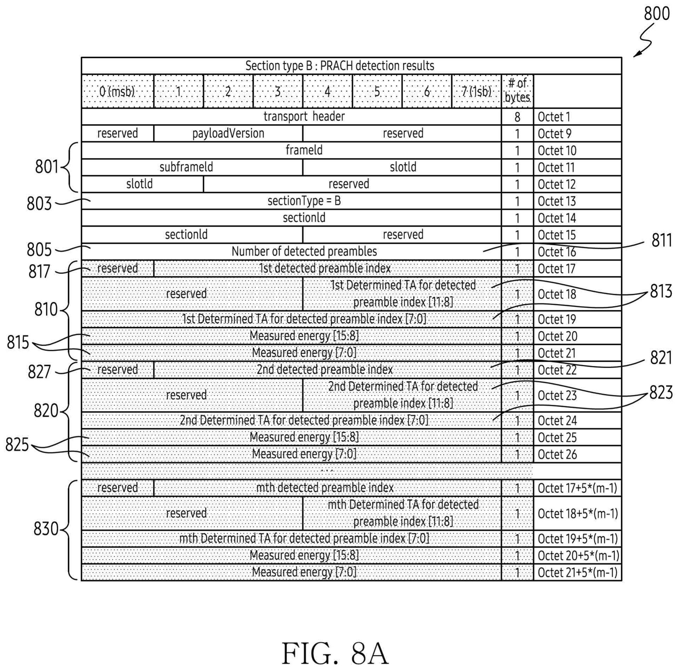

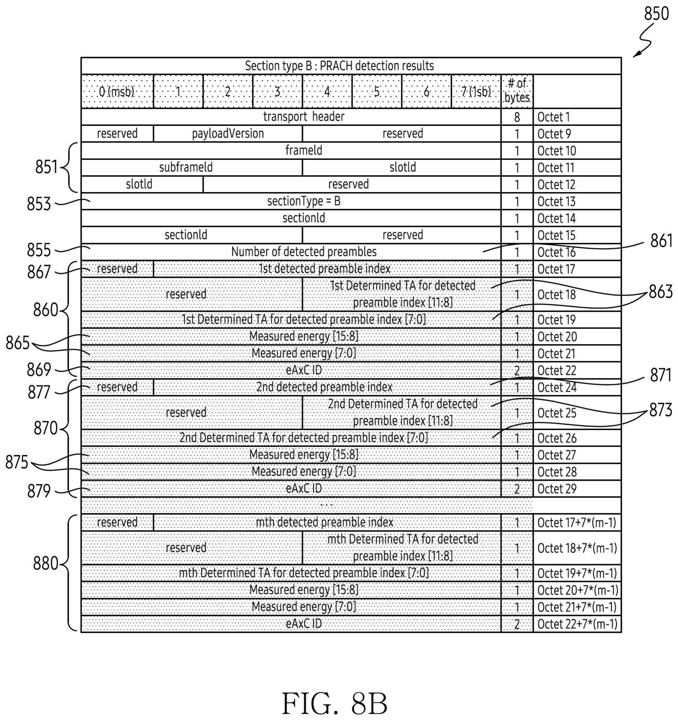

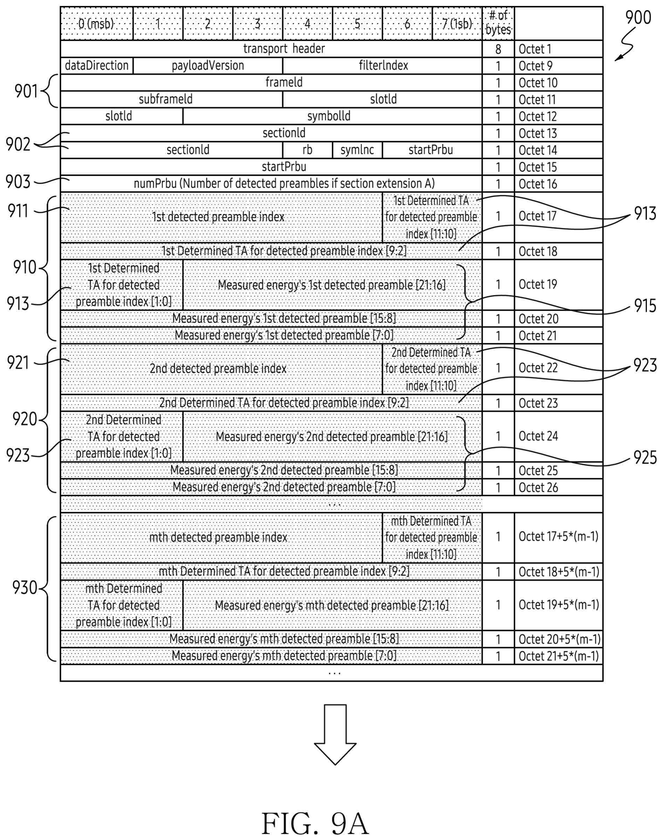

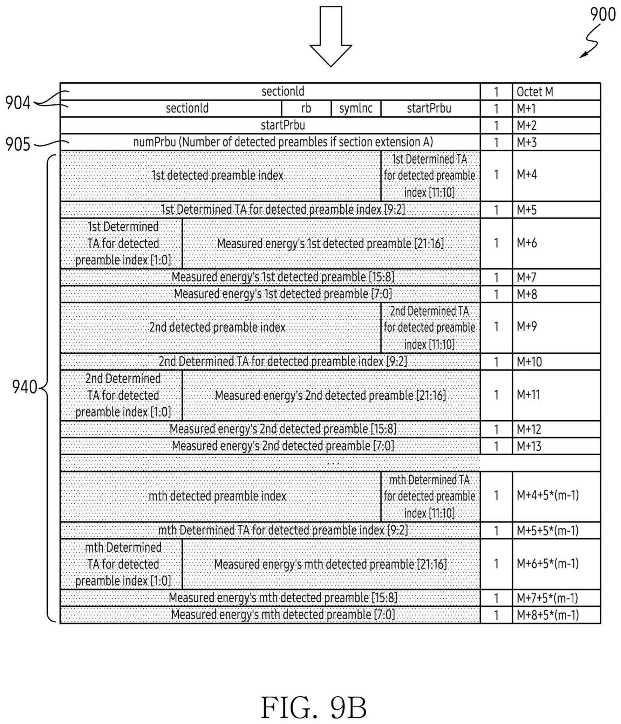

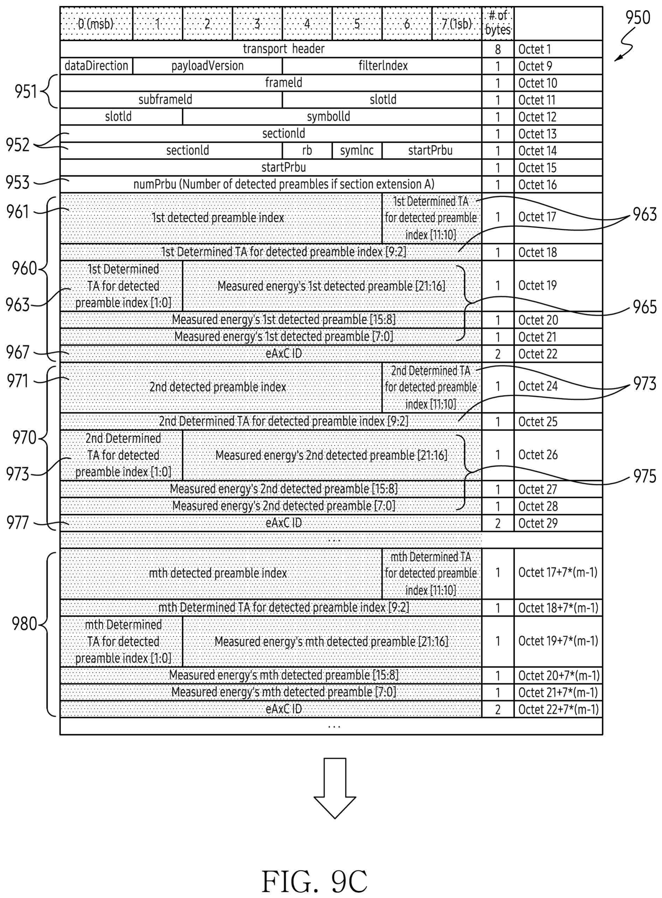

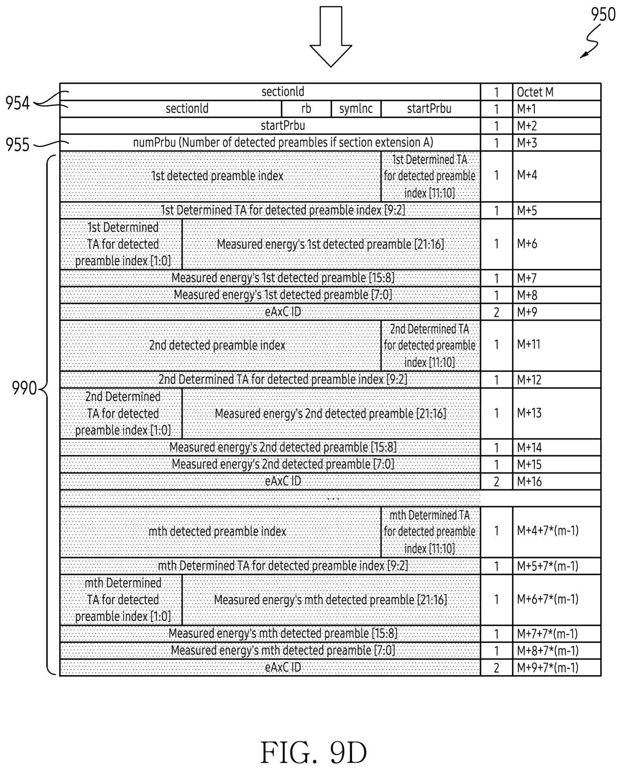

For example, the RU 220 may identify configuration information based on the received (or obtained) control plane message, through the control plane message interpreter 555. For example, the RU 220 may identify the extension type information. For example, the RU 220 may identify a scheduling beam index through the weight generator 557, based on the control plane message. For example, the RU 220 may identify a weight corresponding to the scheduling beam index through the weight memory 559. In addition, the RU 220 may receive the random access preamble from user equipment (not illustrated). For example, the RU 220 may receive a message including a random access preamble from the user equipment. For example, the RU 220 may perform an FFT for the random access preamble through the FFT module 561. For example, the RU 220 may perform pre-combining through the weight multiplier 563, based on an output of the FFT module 561 and the weight. At this time, the pre-combining may include an operation of reducing a number of paths, by grouping antenna ports. The RU 220 may perform detection for the random access preamble through the PRACH detector 565. For example, the RU 220 may perform the detection, based on the extension type information (or the control plane message including the extension type information). Thereafter, the RU 220 may generate an uplink message including information on a result of the detection (hereinafter, detection result) through the uplink message processor 567. For example, the uplink message may include a control plane message or a user plane message. For example, the RU 220 may transmit (or provide) the generated uplink message to the DU 210. For example, the detection result included in the control plane message may include a number of detection random access preambles, an index of each of the detection random access preambles, a TA, and detected energy. Details related thereto are described below in FIG. 8A. Alternatively, for example, the detection result included in the control plane message may include a number of detection random access preambles, an index of each of the detection random access preambles, a TA, detected energy, and an eAxCID. Details related thereto are described below in FIG. 8B. Alternatively, for example, the detection result included in the user plane message may include a number of detection random access preambles, an index of each of the detection random access preambles, a TA, and detected energy. Details related thereto are described below in FIGS. 9A and 9B. Alternatively, for example, the detection result included in the user plane message may include a number of detection random access preambles, an index of each of the detection random access preambles, a TA, detected energy, and an eAxCID. Details related thereto are described below in FIGS. 9C and 9D.

For example, the DU 210 may process the received (or obtained) user plane message through the uplink message processor 569. For example, the DU 210 may identify the detection random access preambles from the user plane message. The DU 210 may identify a specific random access preamble among the detection random access preambles through the RACH scheduler 571. Based on the specific random access preamble, a random access procedure may be performed. For example, based on the specific random access preamble, a message 2 (MSG2) may be transmitted from the RU 220 to the user equipment.

Referring to FIG. 5B, a device and a method according to the embodiments of the present disclosure may reduce resource usage (or capacity) of a fronthaul interface as the RU 220 provides information on the detection random access preamble to the DU 210. In addition, the device and the method according to the embodiments of the present disclosure may reduce a processing time of the DU 210 and perform a random access procedure more quickly. The random access procedure being performed relatively quickly may indicate shortening a call connection delay time. Hereinafter, in the present disclosure, configuration information required for the RU 220 to perform detection for the random access preamble, a format of an uplink message for reporting a result of the detection, and a time interval for transmitting the result of the detection are described.

FIG. 6A illustrates an example of an extension type for detection of a random access preamble.

FIG. 6A illustrates an example of an extension type 600 for detection of the random access preamble. For example, the DU 210 may transmit (or provide) a control plane message including information on the extension type 600 to the RU 220. Accordingly, the RU 220 may perform the detection based on the control plane message (or the extension type). For example, the RU 220 may receive a message (e.g., a message 1) including a random access preamble from the terminal 120. For example, the RU 220 may perform the detection for the random access preamble, based on the control plane message (or the extension type). For example, the detection may be performed based on energy of the random access preamble.

Referring to FIG. 6A, the extension type 600 for detection of the random access preamble may include configuration information required to perform detection of the random access preamble. The extension type 600 may be referred to as extension type information or a section extension (SE).

According to an embodiment, the extension type 600 may include a common parameter. For example, the common parameter may include an extension flag (ef) 601, an extension type (extType) 603, and an extension length (extLen) 605.

For example, the ef 601 may be used to indicate whether another extension type following the extension type 600 exists. For example, the ef 601 may have a field length of 1 bit. For example, in a case that a value of the ef 601 is 1, the other extension type may exist. In contrast, in a case that a value of the ef 601 is 0, the other extension type may not exist. The ef 601 may be referred to as an extension flag.

For example, the extType 603 may be used to indicate the extension type 600. For example, the extType 603 may provide an extension type that provides specific additional parameters for a subject data extension. For example, the extType 603 may have a field length of 7 bits. For example, the extType 603 may have different values for each extension type. For example, the extType 603 of the extension type 600 for detection of the random access preamble may include 0xA. The A may indicate an arbitrary order or number. The A may indicate a number of two or more digits (e.g., 32). The extension type 600 in which the extType 603 is A may be referred to as an extension type A. The extType 603 may be referred to as an index of extension type information.

For example, the extLen 605 may provide a length of the extension type 600. For example, the extLen 605 may provide the length of the extension type 600 in units of a 32-bit (or 4-byte) word. For example, the extLen 605 may have a field length of 8 bits. However, embodiments of the present disclosure are not limited thereto. For example, according to information included in the extension type 600, the extLen 605 may have a field length of 16 bits or more. The extLen 605 may be referred to as a length of extension type information. For example, the extension type 600 may have a length of 8 bytes indicated by the extLen 605.

According to an embodiment, the extension type 600 may include parameters for the detection of the random access preamble. For example, the parameters for the detection may include a 1R (reception path) report configuration 606, a restricted set configuration 607, a root sequence index 609, a number of cyclic shifts 611, indication information 613 and 615 regarding detection random access preambles, and a maximum number 617 of reporting random access preambles.

For example, the 1R report configuration 606 may be used to indicate whether a detection result of the random access preamble is to be transmitted through a reception path (Rx path) associated with the random access preamble. For example, the 1R report configuration 606 may have a field length of 1 bit. For example, in a case that the 1R report configuration 606 is 0, the detection result may be transmitted through each of all reception paths configured between the RU 220 and the DU 210. For example, in a case that the 1R report configuration 606 is 1, the detection result may be transmitted through a reception path. The reception path may be identified based on a random access preamble (or preamble index). For example, the reception path may indicate a path having the highest energy among the same preamble indexes. For example, the path may include an eAxC identifier (eAxcID). As described later, the detection result may be included in a control plane message (e.g., in FIGS. 8A and 8B) or a user plane message (e.g., in FIGS. 9A to 9D).

For example, the restricted set configuration 607 may indicate information associated with mobility. For example, a value of the restricted set configuration 607 may be associated with the mobility. For example, the value of the restricted set configuration 607 may include an unrestricted set, a restrictedSetTypeA, and a restrictedSetTypeB. For example, the restricted set configuration 607 may have a field length of 2 bits. For example, the unrestricted set may indicate a state in which the mobility is low or medium. For example, the unrestricted set may indicate a case in which a Doppler frequency offset (or frequency offset) is equal to or less than a half of subcarrier spacing. For example, the restrictedSetTypeA may indicate a state in which the mobility is high. For example, the restrictedSetTypeA may indicate a case in which the Doppler frequency offset is equal to or less than the subcarrier spacing. For example, the restrictedSetTypeB may indicate a state in which the mobility is very high. For example, the restrictedSetTypeB may indicate a case in which the Doppler frequency offset is equal to or less than twice the subcarrier spacing.

For example, the root sequence index 609 may indicate an index of a root sequence for generating a random access preamble. For example, the root sequence index 609 may have a field length of 12 bits. For example, the root sequence index 609 may include 4 bits (e.g., OctetN N+2) consecutive to the restricted set configuration 607 and subsequent 8 bits (e.g., OctetN N+3).

For example, the number N_{cs} of cyclic shifts 611 may be indicated by a zero correlation zone (ZCZ) configuration (ZCZC). For example, the number 611 of cyclic shifts may have a field length of 9 bits. For example, the number 611 of cyclic shifts may include a first portion (e.g., OctetN N+4) of 7 bits and a second portion (e.g., OctetN N+5) of 2 bits. For example, the number 611 of cyclic shifts may be associated with the restricted set configuration 607.

For example, the indication information 613 and 615 regarding detection random access preambles may indicate random access preambles targeted for detection. For example, the indication information 613 and 615 may indicate preambles targeted for detection, among a maximum number (e.g., 64) of configurable random access preambles. For example, the detection random access preamble may be referred to as a detection target preamble, a detection preamble, a first random access preamble, or a first preamble. For example, the indication information 613 and 615 may include a start number 613 of the detection random access preambles. The start number 613 of the detection random access preambles may have a field length of 6 bits. For example, the start number 613 may include an index (or start index) of the detection random access preambles. For example, the indication information 613 and 615 may include an end number 615 of the detection random access preambles. The end number 615 of the detection random access preambles may have a field length of 6 bits. For example, the end number 615 may include an index (or start index) of the detection random access preambles.

For example, a maximum number 617 of reporting random access preambles (or report random access preambles) may indicate a number of random access preambles targeted for reporting. For example, the maximum number 617 may indicate a maximum number of reporting random access preambles among the detection random access preambles. The reporting random access preamble may be referred to as a reporting target preamble, a reporting preamble, a second random access preamble, or a second preamble. For example, the maximum number 617 may have a field length of 6 bits. In the above example, in a case that indexes of the detection random access preambles indicated by the indication information 613 and 615 are from 1 to 32 (i.e., 32), the maximum number 617 of reporting random access preambles may be a value smaller than 32.

Although not illustrated in FIG. 6A, the extension type 600 may further include additional parameters. For example, the extension type 600 may include at least one of a maximum TA threshold, a detection energy threshold, or whitening information for interference cancellation. For example, the maximum TA threshold may indicate a threshold for a TA value corresponding to a random access preamble. For example, the RU 220 may detect and report a random access having a TA less than or equal to the maximum TA threshold. For example, the detection energy threshold may indicate a threshold for energy of a random access preamble. For example, the RU 220 may detect and report a random access having a TA less than or equal to the detection energy threshold. For example, the whitening information may be used to indicate whether to perform whitening filtering for the interference cancellation. For example, in a case that a value of the whitening information is 0, the RU 220 may perform the whitening filtering. Alternatively, in a case that a value of the whitening information is 1, the RU 220 may not perform (or may omit) the whitening filtering.

Referring to FIG. 6A, the extension type 600 may include a plurality of reserved bits. For example, the plurality of reserved bits may be used for parameters different from the parameters. For example, the parameters may include the maximum TA threshold, the detection energy threshold, or the whitening information for interference cancellation.

According to an embodiment, the extension type 600 may be used in concatenation with a designated section type. For example, the designated section type may include a section type 3 associated with a PRACH. However, embodiments of the present disclosure are not limited thereto. For example, the extension type 600 may also be used in concatenation with a section type 0 for indicating an uplink resource. In addition, according to an embodiment, the extension type 600 may be used in concatenation with the designated section type and another extension type. For example, the extension type 600 may be used in concatenation with the section type 3 and an extension type 10. The extension type 10 may be used to indicate a predefined beam (e.g., beam ID) for measuring a random access preamble. Alternatively, for example, the extension type 600 may be used in concatenation with the section type 3 and an extension type 1. The extension type 1 may be used to indicate an undefined beam (e.g., beamforming weight value) for measuring a random access preamble.

As described above, a section extension (or extension type) capable of being supported according to a section type may be defined through a user plane configuration module (or YANG module. The module may define the section extension capable of being supported according to the section type as follows.

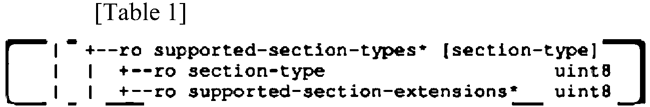

Referring to the above table, in relation to the extension type 600, a value (uint8) of supported-section-extensions may indicate a value A of the extType 603. In this case, a value (uint8) of section-type may indicate 3 (i.e., section type 3). However, as described above, the value of the extType 603 and a value of section-type corresponding thereto are merely exemplary, and embodiments of the present disclosure are not limited thereto.

The extension type 600 of FIG. 6A is merely exemplary, and embodiments of the present disclosure are not limited thereto. For example, positions and lengths of parameters in the extension type 600 may be changed.

FIG. 6B illustrates an example of an extension type for detection of a random access preamble.

FIG. 6B illustrates an example of an extension type 650 for detection of the random access preamble. For example, the DU 210 may transmit (or provide), to the RU 220, a control plane message including information on the extension type 650. Accordingly, the RU 220 may perform the detection, based on the control plane message (or the extension type). For example, the RU 220 may receive a message (e.g., message 1) including a random access preamble from a terminal 120. For example, the RU 220 may perform the detection for the random access preamble, based on the control plane message (or the extension type). For example, the detection may be performed based on energy of the random access preamble.

Referring to FIG. 6B, the extension type 650 for detection of the random access preamble may include configuration information required to perform the detection of the random access preamble. The extension type 650 may be referred to as extension type information or a section extension (SE).

According to an embodiment, the extension type 650 may include a common parameter. For example, the common parameter may include an extension flag (ef) 651, an extension type (extType) 653, and an extension length (extLen) 655.

For example, the ef 651 may be used to indicate whether another extension type following the extension type 650 exists. For example, the ef 651 may have a field length of 1 bit. For example, in a case that a value of the ef 651 is 1, the other extension type may exist. Conversely, in a case that a value of the ef 651 is 0, the other extension type may not exist. The ef 651 may be referred to as an extension flag.

For example, the extType 653 may be used to indicate the extension type 650. For example, the extType 653 may provide an extension type that provides specific additional parameters to a subject data extension. For example, the extType 653 may have a field length of 7 bits. For example, the extType 653 may have different values for each extension type. For example, the extType 653 of the extension type 650 for the detection of the random access preamble may include 0xA. The A may indicate an arbitrary order or number. The A may indicate a number having two or more digits (e.g., 32). The extension type 650 in which the exType 653 is A may be referred to as an extension type A. The extType 653 may be referred to as an index of extension type information.

For example, the extLen 655 may provide a length of the extension type 650. For example, the extLen 655 may provide the length of the extension type 650 in units of a 32-bit (or 4-byte) word. For example, the extLen 655 may have a field length of 8 bits. However, embodiments of the present disclosure are not limited thereto. For example, according to information included in the extension type 650, the extLen 655 may have a field length of 16 bits or more. The extLen 655 may be referred to as a length of extension type information. For example, the extension type 650 may have a length of 8 bytes indicated by the extLen 655.

According to an embodiment, the extension type 650 may include parameters for the detection of the random access preamble. For example, the parameters for the detection may include a 1R report configuration 656, a restricted set configuration 657, a root sequence index 659, a number of cyclic shifts 661, indication information 663 and 665 regarding detection random access preambles, and a maximum number 667 of reporting random access preambles.

For example, the 1R report configuration 656 may be used to indicate whether to transmit the detection result of the random access preamble through a reception path (Rx path) associated with the random access preamble. For example, the 1R report configuration 656 may have a field length of 1 bit. For example, in a case that the 1R report configuration 656 is 0, the detection result may be transmitted through each of all reception paths configured between the RU 220 and the DU 210. For example, in a case that the 1R report configuration 656 is 1, the detection result may be transmitted through a reception path. The reception path may be identified based on a random access preamble (or preamble index). For example, the reception path may indicate a path having the highest energy among the same preamble indexes. For example, the path may include an eAxC identifier (eAxcID). As described later, the detection result may be included in a control plane message (e.g., in FIGS. 8A and 8B) or a user plane message (e.g., in FIGS. 9A through 9D).

For example, the restricted set configuration 657 may indicate information associated with mobility. For example, a value of the restricted set configuration 657 may be associated with the mobility. For example, the value of the restricted set configuration 657 may include an unrestricted set, a restrictedSetTypeA, and a restrictedSetTypeB. For example, the restricted set configuration 657 may have a field length of 2 bits. For example, the unrestricted set may indicate a low or medium state of the mobility. For example, the unrestricted set may indicate a case that a Doppler frequency offset (or a frequency offset) is equal to or less than a half of subcarrier spacing. For example, the restrictedSetTypeA may indicate a high state of the mobility. For example, the restrictedSetTypeA may indicate a case in which the Doppler frequency offset is equal to or less than the subcarrier spacing. For example, the restrictedSetTypeB may indicate a very high state of the mobility. For example, the restrictedSetTypeB may indicate a case in which the Doppler frequency offset is equal to or less than twice the subcarrier spacing.

For example, the root sequence index 659 may indicate an index of a root sequence for generating a random access preamble. For example, the root sequence index 659 may have a field length of 12 bits. For example, the root sequence index 659 may include 4 bits (e.g., OctetN N+2) consecutive to the restricted set configuration 657 and subsequent 8 bits (e.g., OctetN N+3).

For example, the number N-_{cs} of cyclic shifts 661 may be indicated by a zero correlation zone (ZCZ) configuration (ZCZC). For example, the number 661 of cyclic shifts may have a field length of 9 bits. For example, the number 661 of cyclic shifts may include a first portion (e.g., OctetN N+4) of 7 bits and a second portion (e.g., OctetN N+5) of 2 bits. For example, the number 661 of cyclic shifts may be associated with the restricted set configuration 657.

For example, the indication information 663 and 665 regarding detection random access preambles may indicate random access preambles targeted for detection. For example, the indication information 663 and 665 may indicate preambles to be targeted for detection, among a maximum number (e.g., 64) of configurable random access preambles. For example, the detection random access preamble may be referred to as a detection target preamble, a detection preamble, a first random access preamble, or a first preamble. For example, the indication information 663 and 665 may include a start number 663 of the detection random access preambles. The start number 663 of the detection random access preambles may have a field length of 6 bits. For example, the start number 663 may include an index (or start index) of the detection random access preambles. For example, the indication information 663 and 665 may include a length 665 of the detection random access preambles. The length 665 of the detection random access preambles may have a field length of 6 bits. For example, the length 665 may include a number of the detection random access preambles consecutive from the start number 663.

For example, a maximum number 667 of reporting random access preambles may indicate a number of random access preambles targeted for reporting. For example, the maximum number 667 may indicate a maximum number of reporting random access preambles among the detection random access preambles. The reporting random access preamble may be referred to as a reporting target preamble, a reporting preamble, a second random access preamble, or a second preamble. For example, the maximum number 667 may have a field length of 6 bits. In the above example, in a case that indexes of the detection random access preambles indicated by the indication information 663 and 665 are from 1 to 32 (i.e., 32), the maximum number 667 of reporting random access preambles may be a value smaller than 32.

Although not illustrated in FIG. 6B, the extension type 650 may further include additional parameters. For example, the extension type 650 may include at least one of a maximum TA threshold, a detection energy threshold, or whitening information for interference cancellation. For example, the maximum TA threshold may indicate a threshold for a TA value corresponding to a random access preamble. For example, the RU 220 may detect and report a random access having a TA less than or equal to the maximum TA threshold. For example, the detection energy threshold may indicate a threshold for energy of a random access preamble. For example, the RU 220 may detect and report a random access having a TA less than or equal to the detection energy threshold. For example, the whitening information may be used to indicate whether to perform whitening filtering for the interference cancellation. For example, in a case that a value of the whitening information is 0, the RU 220 may perform the whitening filtering. Conversely, in a case that a value of the whitening information is 1, the RU 220 may not perform (or may omit) the whitening filtering.

Referring to FIG. 6B, the extension type 650 may include a plurality of reserved bits. For example, the plurality of reserved bits may be used for parameters different from the parameters. For example, the parameters may include the maximum TA threshold, the detection energy threshold, or the whitening information for interference cancellation.

According to an embodiment, the extension type 650 may be used in concatenation with a designated section type. For example, the designated section type may include a section type 3 associated with a PRACH. However, embodiments of the present disclosure are not limited thereto. For example, the extension type 650 may also be used in concatenation with a section type 0 for indicating an uplink resource.

In addition, according to an embodiment, the extension type 650 may be used in concatenation with a designated section type and another extension type. For example, the extension type 650 may be used in concatenation with the section type 3 and an extension type 10. The extension type 10 may be used to indicate a predefined beam (e.g., beam ID) for measuring a random access preamble. Alternatively, for example, the extension type 650 may be used in concatenation with the section type 3 and an extension type 1. The extension type 1 may be used to indicate an undefined beam (e.g., beamforming weight value) for measuring a random access preamble.

As described above, a section extension (or extension type) capable of being supported according to a section type may be defined through a user plane configuration module (or YANG module). The module may define the section extension capable of being supported according to a section type as illustrated in Table 1. Referring to Table 1 described above, in relation to the extension type 650, a value (uint8) of supported-section-extensions may indicate a value A of the extType 653. In this case, a value (uint8) of section-type may indicate 3 (i.e., section type 3). However, as described above, the value of the extType 653 and a value of section-type corresponding thereto are merely exemplary, and embodiments of the present disclosure are not limited thereto.

The extension type 650 of FIG. 6B is merely exemplary, and embodiments of the present disclosure are not limited thereto. For example, positions and lengths of parameters in the extension type 650 may be changed.

Referring to FIGS. 6A and 6B, the extension type 600 (or the extension type 650) may include indication information 613 and 615 (or indication information 663 and 665) regarding consecutive detection random access preambles. The RU 220 may identify the consecutive detection random access preambles, based on the extension type 600 (or the extension type 650). Hereinafter, in FIG. 7, an example of an extension type including information indicating nonconsecutive detection random access preambles is illustrated.

FIG. 7 illustrates an example of an extension type for detection of a random access preamble.

FIG. 7 illustrates an example of an extension type 700 for detection of the random access preamble. For example, the DU 210 may transmit (or provide), to the RU 220, a control plane message including information on the extension type 700. Accordingly, the RU 220 may perform the detection, based on the control plane message (or the extension type). For example, the RU 220 may receive a message (e.g., message 1) including a random access preamble from a terminal 120. For example, the RU 220 may perform the detection for the random access preamble, based on the control plane message (or the extension type). For example, the detection may be performed based on energy of the random access preamble.

Referring to FIG. 7, the extension type 700 for detection of the random access preamble may include configuration information required to perform the detection of the random access preamble. The extension type 700 may be referred to as extension type information or a section extension (SE).

According to an embodiment, the extension type 700 may include a common parameter. For example, the common parameter may include an extension flag (ef) 701, an extension type (extType) 703, and an extension length (extLen) 705.

For example, the ef 701 may be used to indicate whether another extension type following the extension type 700 exists. For example, the ef 701 may have a field length of 1 bit. For example, in a case that a value of the ef 701 is 1, the other extension type may exist. Conversely, in a case that a value of the ef 701 is 0, the other extension type may not exist. The ef 701 may be referred to as an extension flag.

For example, the extType 703 may be used to indicate the extension type 700. For example, the extType 703 may provide an extension type that provides specific additional parameters to a subject data extension. For example, the extType 703 may have a field length of 7 bits. For example, the extType 703 may have different values for each extension type. For example, the extType 703 of the extension type 700 for the detection of the random access preamble may include 0xA. The A may indicate an arbitrary order or number. The A may indicate a number having two or more digits (e.g., 32). The extension type 700 in which the extType 703 is A may be referred to as an extension type A. The extType 703 may be referred to as an index of extension type information.

For example, the extLen 705 may provide a length of the extension type 700. For example, the extLen 705 may provide the length of the extension type 700 in units of a 32-bit (or 4-byte) word. For example, the extLen 705 may have a field length of 8 bits. However, embodiments of the present disclosure are not limited thereto. For example, according to information included in the extension type 700, the extLen 705 may have a field length of 16 bits or more. The extLen 705 may be referred to as a length of extension type information. For example, the extension type 700 may have a length of 16 bytes indicated by the extLen 705.

According to an embodiment, the extension type 700 may include parameters for the detection of the random access preamble. For example, the parameters for the detection may include a 1R report configuration 706, a restricted set configuration 707, a root sequence index 709, a number N_{cs} of cyclic shifts 711, a bitmap 713 for indicating detection random access preambles, and a maximum number 715 of reporting random access preambles.

For example, the 1R report configuration 706 may be used to indicate whether to transmit the detection result of the random access preamble through a reception path (Rx path) associated with the random access preamble. For example, the 1R report configuration 706 may have a field length of 1 bit. For example, in a case that the 1R report configuration 706 is 0, the detection result may be transmitted through each of all reception paths configured between the RU 220 and the DU 210. For example, in a case that the 1R report configuration 706 is 1, the detection result may be transmitted through a reception path. The reception path may be identified based on the random access preamble (or preamble index). For example, the reception path may indicate a path having the highest energy among the same preamble indexes. For example, the path may include an eAxC identifier (eAxcID). As described later, the detection result may be included in a control plane message (e.g., in FIGS. 8A and 8B) or a user plane message (e.g., in FIGS. 9A to 9D).

For example, the restricted set configuration 707 may indicate information associated with mobility. For example, a value of the restricted set configuration 707 may be associated with the mobility. For example, the value of the restricted set configuration 707 may include an unrestricted set, a restrictedSetTypeA, and a restrictedSetTypeB. For example, the restricted set configuration 707 may have a field length of 2 bits. For example, the unrestricted set may indicate a low or medium state of the mobility. For example, the unrestricted set may indicate a case that a Doppler frequency offset (or a frequency offset) is equal to or less than a half of subcarrier spacing. For example, the restrictedSetTypeA may indicate a high state of the mobility. For example, the restrictedSetTypeA may indicate a case in which the Doppler frequency offset is equal to or less than the subcarrier spacing. For example, the restrictedSetTypeB may indicate a very high state of the mobility. For example, the restrictedSetTypeB may indicate a case in which the Doppler frequency offset is equal to or less than twice the subcarrier spacing.

For example, the root sequence index 709 may indicate an index of a root sequence for generating a random access preamble. For example, the root sequence index 709 may have a field length of 12 bits. For example, the root sequence index 709 may include 4 bits (e.g., OctetN N+2) consecutive to the restricted set configuration 707 and subsequent 8 bits (e.g., OctetN N+3).

For example, the number N_{cs} of cyclic shifts 711 may be indicated by a zero correlation zone (ZCZ) configuration (ZCZC). For example, the number 711 of cyclic shifts may have a field length of 9 bits. For example, the number 711 of cyclic shifts may include a first portion (e.g., OctetN N+4) of 7 bits and a second portion (e.g., OctetN N+5) of 2 bits. For example, the number 711 of cyclic shifts may be associated with the restricted set configuration 707.

For example, a bitmap 713 for indicating detection random access preambles may indicate random access preambles targeted for detection. For example, the bitmap 713 may indicate preambles targeted for detection among a maximum number (e.g., 64) of configurable random access preambles. For example, the detection random access preamble may be referred to as a detection target preamble, a detection preamble, a first random access preamble, or a first preamble. For example, the bitmap 713 may have a field length of 64 bits. For example, the bitmap 713 may include bits within Octet N+6 to Octet N+13. For example, in a case that a value of the bitmap 713 is 1, a random access preamble of a corresponding index may be identified as a detection target. In other words, a random access preamble in which a value of the bitmap 713 is 1 may be identified as a detection random access preamble. Conversely, in a case that a value of the bitmap 713 is 0, a random access preamble of the corresponding index may be identified as not for detection.

For example, the maximum number 715 of reporting random access preambles may indicate a number of random access preambles targeted for reporting. For example, the maximum number 715 may indicate a maximum number of reporting random access preambles among the detection random access preambles. The reporting random access preamble may be referred to as a reporting target preamble, a reporting preamble, a second random access preamble, or a second preamble. For example, the maximum number 715 may have a field length of 6 bits. In the above example, in a case that a total of 32 detection random access preambles are indicated by the bitmap 713, the maximum number 715 of reporting random access preambles may be a value smaller than 32.

Although not illustrated in FIG. 7, the extension type 700 may further include additional parameters. For example, the extension type 700 may include at least one of a maximum TA threshold, a detection energy threshold, or whitening information for interference cancellation. For example, the maximum TA threshold may indicate a threshold for a TA value corresponding to a random access preamble. For example, the RU 220 may detect and report a random access having a TA less than or equal to the maximum TA threshold. For example, the detection energy threshold may indicate a threshold for energy of a random access preamble. For example, the RU 220 may detect and report a random access having a TA less than or equal to the detection energy threshold. For example, the whitening information may be used to indicate whether to perform the whitening filtering for the interference cancellation. For example, in a case that a value of the whitening information is 0, the RU 220 may perform the whitening filtering. Conversely, in a case that a value of the whitening information is 1, the RU 220 may not perform (or may omit) the whitening filtering.

Referring to FIG. 7, the extension type 700 may include a plurality of reserved bits. For example, the plurality of reserved bits may be used for parameters different from the parameters. For example, the parameters may include the maximum TA threshold, the detection energy threshold, or the whitening information for the interference cancellation.

According to an embodiment, the extension type 700 may be used in concatenation with a designated section type. For example, the designated section type may include a section type 3 associated with a PRACH. However, embodiments of the present disclosure are not limited thereto. For example, the extension type 700 may also be used in concatenation with a section type 0 for indicating an uplink resource.

In addition, according to an embodiment, the extension type 700 may be used in concatenation with a designated section type and another extension type. For example, the extension type 700 may be used in concatenation with the section type 3 and an extension type 10. The extension type 10 may be used to indicate a predefined beam (e.g., beam ID) for measuring a random access preamble. Alternatively, for example, the extension type 700 may be used in concatenation with the section type 3 and an extension type 1. The extension type 1 may be used to indicate an undefined beam (e.g., beamforming weight value) for measuring a random access preamble.

As described above, a section extension (or extension type) capable of being supported according to a section type may be defined through a user plane configuration module (or YANG module). The module may define the section extension capable of being supported according to the section type as illustrated in Table 1. Referring to Table 1 described above, in relation to the extension type 700, a value (uint8) of supported-section-extensions may indicate a value A of the extType 703. In this case, a value (uint8) of a section type may indicate 3 (i.e., section type 3). However, as described above, the value of the extType 703 and a value of section-type corresponding thereto are merely exemplary, and embodiments of the present disclosure are not limited thereto.

The extension type 700 of FIG. 7 is merely exemplary, and embodiments of the present disclosure are not limited thereto. For example, positions and lengths of parameters in the extension type 700 may be changed.

Referring to FIG. 7, based on the extension type 700 including the bitmap 713, the RU 220 may identify arbitrary random access preambles as detection random access preambles. In other words, when the extension type 700 is used in comparison with the extension type 600 (or the extension type 650), more flexible operation may be possible.

FIGS. 8A and 8B illustrate an example of a control plane message including detection result of a random access preamble.

FIG. 8A illustrates an example of a control plane message 800 including the detection result of the random access preamble. The control plane message 800 including the detection result may be included in an uplink message transmitted by the RU 220 to the DU 210. For example, the RU 220 may perform the detection for the random access preamble and generate information including a result of the detection (hereinafter, detection result). For example, the RU 220 may provide (or transmit), to the DU 210, the control plane message 800 including the detection result.

Referring to FIG. 8A, a control plane message 800 including the detection result may be used to transmit a result of the detection of the random access preamble. For example, the control plane message 800 may be associated with a specific section type. For example, the specific section type may include a section type B. The B may indicate an arbitrary order or number. For example, the B may include 13. In other words, the control plane message 800 may be associated with the section type B.

According to an embodiment, in a case that the control plane message 800 is newly defined, a new definition for an endpoint of a section type may be required. For example, the endpoint may be defined for each channel. For example, the channel may include a PRACH, a physical uplink shared channel (PUSCH), a physical uplink control channel (PUCCH), a PDSCH, and a PDCCH. For example, the endpoint may indicate section types (or supporting section types) capable of being supported for each channel. As described above, in a case that the control plane message 800 is associated with the section type B, the endpoint may indicate the section type B.

As described above, the section types capable of being supported may be defined through a user plane configuration module (or YANG module). The module may define the section types capable of being supported as follows.

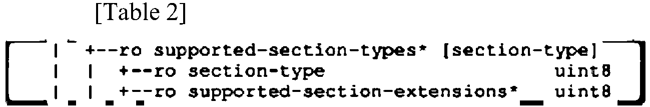

Referring to the table, in relation to the control plane message 800, a value (uint8) of a section type may indicate B (i.e., section type B). However, as described above, the control plane message 800 and a value of section-type corresponding thereto are merely exemplary, and embodiments of the present disclosure are not limited thereto. In this case, the section type B may be used for an extension type A (e.g., the extension type 600 of FIG. 6A, the extension type 650 of FIG. 6B, or the extension type 700 of FIG. 7). For example, the section type B may be used as a response to the extension type A and a designated section type (e.g., section type 3) concatenated therewith.

Referring to FIG. 8A, according to an embodiment, the control plane message 800 may include time header information 801, section type information 803, a number 805 of detected preambles, and detection results 810, 820, and 830.

For example, the time header information 801 may include a frame ID, a subframe ID, and a slot ID. For example, the time header information 801 may indicate a location at which detected random access preambles are identified. For example, the detected random access preamble may be referred to as a random access preamble on which detection is performed, a received random access preamble, a third random access preamble, a third preamble, or a detected preamble. The location may indicate timing at which the detected random access preambles are received.

For example, the section type information 803 may be used to indicate the section type B. For example, the section type information 803 may have a field length of 12 bits. For example, the section type information 803 may have different values for each section type.

For example, the number 805 of detected preambles may indicate a number of detected random access preambles among random access preambles received by the RU 220. For example, the detected random access preambles may indicate preambles identified based on the detection among the random access preambles received from the terminal 120. For example, the number 805 of detected preambles may have a field length of 7 bits. In other words, a range of numbers indicated by the number 805 of detected preambles may be formed from 0 to 127. That is, the number 805 of detected preambles may indicate up to 64 preambles (e.g., in a case that a number of detection random access preambles is 64 and a number of reporting random access preambles is also 64). For example, the number 805 of detected preambles may be equal to or less than the maximum number 617 (or the maximum number 667 or the maximum number 715) included in the extension type 600 (or the extension type 650 or the extension type 700). In other words, a number of the detected random access preambles may be less than a number of the reporting random access preambles. According to an embodiment, the number 805 of detected preambles may be associated with a number of detection results 810, 820, and 830. For example, the number of the detection results 810, 820, and 830 may correspond to the number 805 of detected preambles. For example, in a case that the number 805 of detected preambles is 4, the number of the detection results 810, 820, and 830 may be 4 (i.e., m=4 in FIG. 8A).

According to an embodiment, the detection result 810 may include information on a first detected preamble among the detected preambles. For example, the detection result 810 may include a preamble index 811, a TA 813 corresponding to a preamble index, and detected energy 815.

For example, the preamble index 811 may include an index indicating the first detected preamble among the detected preambles. For example, the preamble index 811 may have a field length of 6 bits. Accordingly, the preamble index 811 may indicate a total of 64 random access preambles. For example, the TA 813 corresponding to a preamble index may include a determined TA value for the preamble index 811 of the first detected preamble. For example, the TA 813 may have a field length of 12 bits. For example, the detected energy 815 may include a value of energy detected for the first detected preamble. For example, the detected energy 815 may have a field length of 16 bits. For example, the energy may include at least one of power, a signal to noise ratio (SNR), a received signal strength indicator (RSSI), or a reference signal received power (RSRP). The value of the detected energy 815 may include an absolute value of the energy. According to an embodiment, a reserved bit 817 included in the detection result 810 may be used to indicate a type of the detected energy 815. For example, the type may include power, a signal to noise ratio (SNR), a received signal strength indicator (RSSI), or a reference signal received power (RSRP).

In addition, according to an embodiment, the detection result 820 may include information on a second detected preamble among the detected preambles. For example, the detection result 820 may include a preamble index 821, a TA 823 corresponding to a preamble index, and detected energy 825.

For example, the preamble index 821 may include an index indicating the second detected preamble among the detected preambles. For example, the preamble index 821 may have a field length of 6 bits. Accordingly, the preamble index 821 may indicate a total of 64 random access preambles. For example, the TA 823 corresponding to a preamble index may include a determined TA value for the preamble index 821 of the second detected preamble. For example, the TA 823 may have a field length of 12 bits. For example, the detected energy 825 may include a value of energy detected for the second detected preamble. For example, the detected energy 825 may have a field length of 16 bits. For example, the energy may include at least one of power, a signal to noise ratio (SNR), a received signal strength indicator (RSSI), or a reference signal received power (RSRP). The value of the detected energy 825 may include an absolute value of the energy. According to an embodiment, a reserved bit 827 included in the detection result 820 may be used to indicate a type of the detected energy 825. For example, the type may include power, a signal to noise ratio (SNR), a received signal strength indicator (RSSI), or a reference signal received power (RSRP).

In addition, according to an embodiment, the detection result 830 may include information on an m-th detected preamble among the detected preambles. For example, the detection result 830 may include a preamble index for the m-th detected preamble, a TA corresponding to a preamble index, and detected energy. As for the related content, contents of the detection result 810 or the detection result 820 may be applied substantially the same.

FIG. 8B illustrates an example of a control plane message 850 including the detection result of the random access preamble. The control plane message 850 including the detection result may be included in an uplink message transmitted by the RU 220 to the DU 210. For example, the RU 220 may perform the detection for the random access preamble and generate information including a result of the detection (hereinafter, detection result). For example, the RU 220 may provide (or transmit), to the DU 210, the control plane message 850 including the detection result.

Referring to FIG. 8B, the control plane message 850 including the detection result may be used to transmit a result of the detection of the random access preamble. For example, the control plane message 850 may be associated with a specific section type. For example, the specific section type may include a section type B. The B may indicate an arbitrary order or number. For example, the B may include 13. In other words, the control plane message 850 may be associated with the section type B.

Referring to FIG. 8B, according to an embodiment, the control plane message 850 may include time header information 851, section type information 853, a number 855 of detected preambles, and detection results 860, 870, and 880. The control plane message 800 of FIG. 8A may be substantially identically applied to the description regarding the control plane message 850 of FIG. 8B. For example, the time header information 851 may correspond to the time header information 801. For example, the section type information 853 may correspond to the section type information 803. For example, the number 855 of detected preambles may correspond to the number 805 of detected preambles.

The detection results 860, 870, and 880 included in the control plane message 850 of FIG. 8B may be different from the detection results 810, 820, and 830 included in the control plane message 800 of FIG. 8A. For example, the control plane message 800 of FIG. 8A may be transmitted in response to a case that the 1R report configuration (e.g., the 1R report configuration 606 of FIG. 6A, the 1R report configuration 656 of FIG. 6B, or the 1R report configuration 706 of FIG. 7) included in the extension type A (e.g., the extension type 600 of FIG. 6A, the extension type 650 of FIG. 6B, or the extension type 700 of FIG. 7) is 0. In contrast, the control plane message 850 of FIG. 8B may be transmitted in response to a case that the 1R report configuration (e.g., the 1R report configuration 606 of FIG. 6A, the 1R report configuration 656 of FIG. 6B, or the 1R report configuration 706 of FIG. 7) included in the extension type A (e.g., the extension type 600 of FIG. 6A, the extension type 650 of FIG. 6B, or the extension type 700 of FIG. 7) is 1.

According to an embodiment, the detection result 860 may include information on a first detected preamble among the detected preambles. For example, the detection result 860 may include a preamble index 861, a TA 863 corresponding a the preamble index, detected energy 865, and an eAxCID 869.

For example, the preamble index 861 may include an index indicating the first detected preamble among the detected preambles. For example, the preamble index 861 may have a field length of 6 bits. Accordingly, the preamble index 861 may indicate a total of 64 random access preambles. For example, the TA 863 corresponding to a preamble index may include a determined TA value for the preamble index 861 of the first detected preamble. For example, the TA 863 may have a field length of 12 bits. For example, the detected energy 865 may include a value of detected energy with respect to the first detected preamble. For example, the detected energy 865 may have a field length of 16 bits. For example, the energy may include at least one of power, a signal-to-noise ratio (SNR), a received signal strength indicator (RSSI), or a reference signal received power (RSRP). The value of the detected energy 865 may include an absolute value of the energy. According to an embodiment, a reserved bit 867 included in the detection result 860 may be used to indicate a type of the detected energy 865. For example, the type may include power, a signal-to-noise ratio (SNR), a received signal strength indicator (RSSI), or a reference signal received power (RSRP). For example, the eAxCID 869 may have a field length of 16 bits. For example, the control plane message 850 may include the eAxCID 869 of a reception path having the highest energy among the reception paths, in a case that the 1R report configuration is 1 and a detected preamble for each of reception paths configured between the RU 220 and the DU 210 has the same index (e.g., the first detected preamble).

In addition, according to an embodiment, the detection result 870 may include information on a second detected preamble among the detected preambles. For example, the detection result 870 may include a preamble index 871, a TA 873 corresponding to a preamble index, detected energy 875, and an eAxCID 879.

For example, the preamble index 871 may include an index indicating the second detected preamble among the detected preambles. For example, the preamble index 871 may have a field length of 6 bits. Accordingly, the preamble index 871 may indicate a total of 64 random access preambles. For example, the TA 873 corresponding to a preamble index may include a determined TA value for the preamble index 871 of the second detected preamble. For example, the TA 873 may have a field length of 12 bits. For example, the detected energy 875 may include a value of detected energy with respect to the second detected preamble. For example, the detected energy 875 may have a field length of 16 bits. For example, the energy may include at least one of power, a signal-to-noise ratio (SNR), a received signal strength indicator (RSSI), or a reference signal received power (RSRP). The value of the detected energy 875 may include an absolute value of the energy. According to an embodiment, a reserved bit 877 included in the detection result 870 may be used to indicate a type of the detected energy 875. For example, the type may include power, a signal-to-noise ratio (SNR), a received signal strength indicator (RSSI), or a reference signal received power (RSRP). For example, the eAxCID 879 may have a field length of 16 bits. For example, the control plane message 850 may include the eAxCID 879 of a reception path having the highest energy among the reception paths, in a case that the 1R report configuration is 1 and a detected preamble for each of reception paths configured between the RU 220 and the DU 210 has the same index (e.g., the second detected preamble).

In addition, according to an embodiment, the detection result 880 may include information on an m-th detected preamble among the detected preambles. For example, the detection result 880 may include a preamble index for the m-th detected preamble, a TA corresponding to a preamble index, a detected energy, and an eAxCID. As for the related content, contents of the detection result 860 or the detection result 870 may be substantially identically applied.

In the example of FIGS. 8A and 8B, an example in which the RU 220 reports the detection result to the DU 210 through the control plane message 800 or the control plane message 850 is described, but the embodiments of the present disclosure are not limited thereto. Hereinafter, FIGS. 9A to 9D describe a method in which the RU 220 reports the detection result to the DU 210 through a user plane rather than the control plane.

FIGS. 9A to 9D illustrate an example of a user plane message including detection result of a random access preamble.

FIGS. 9A and 9B illustrate an example of a user plane message 900 including the detection result of the random access preamble. For convenience of description, the user plane message 900 is illustrated separately in FIGS. 9A and 9B, but the user plane messages 900 of FIGS. 9A and 9B may indicate an example of one user plane message. The user plane message 900 including the detection result may be included in an uplink message transmitted from the RU 220 to the DU 210. For example, the RU 220 may perform the detection for the random access preamble and may generate the detection result. For example, the RU 220 may provide (or transmit), to the DU 210, the user plane message 900 including the detection result.

Referring to FIGS. 9A and 9B, the user plane message 900 may be used to provide IQ data generated by the RU 220 to the DU 210. In this case, the user plane message 900 may include the detection result instead of information for transmitting the IQ data. For example, since the detection result regarding the random access preamble is not IQ data, information associated with a PRB (e.g., a start PRB (startPrbu) and a number of PRBs (numPrbu)) may be unnecessary for the detection result. Since the detection result is not the IQ data, compression for an octet may not be required. Therefore, the user plane message 900 including the detection result instead of the information associated with the PRB may be transmitted.

Referring to FIGS. 9A and 9B, according to an embodiment, the user plane message 900 may include time header information 901, a number of PRBs 903, and detection results 910, 920, and 930.

For example, the time header information 901 may include a frame ID (frameID), a subframe ID (subframeID), and a slot ID (slotID). For example, the time header information 901 may indicate a location where the detected random access preambles are identified. For example, the detected random access preamble may be referred to as a random access preamble on which detection is performed, a received random access preamble, a third random access preamble, a third preamble, or a detected preamble. The location may indicate timing at which the detected random access preambles are received.

For example, the number of PRBs 903 may include information of PRBs allocated for the IQ data. According to an embodiment, the user plane message 900 including the detection result may use the number of PRBs 903 for indicating the number of detected preambles, instead of the number of PRBs 903 for information of the PRBs. For example, in a case that the extension type A is used within the designated section type (e.g., section type 3), the number of PRBs 903 may indicate the number of the detected preambles instead of the information of the PRBs. For example, the use of the extension type A within the designated section type may be identified based on a section ID 902 of the user plane message 900. For example, in a case that a section type and an extension type of a control plane message having a section ID corresponding to the section ID 902 of the user plane message 900 are the designated section type and the extension type A, the RU 220 may identify that the extension type A is used within the designated section type. For example, the number of PRBs 903 may have a field length of 8 bits. In this case, the number of the detected preambles may be indicated through at least a portion (e.g., 7 bits) of the field length of 8 bits.

According to an embodiment, the number of the detected preambles may be associated with the number of detection results 910, 920, and 930. For example, the number of the detection results 910, 920, and 930 may correspond to the number of the detected preambles. For example, in a case that the number of the detected preambles is 4, the number of the detection results 910, 920, and 930 may be 4 (i.e., m=4 in FIGS. 9A and 9B).

According to an embodiment, the detection result 910 may include information on a first detected preamble among the detected preambles. For example, the detection result 910 may include a preamble index 911, a TA 913 corresponding to a preamble index, and detected energy 915.

For example, the preamble index 911 may include an index indicating the first detected preamble among the detected preambles. For example, the preamble index 911 may have a field length of 6 bits. Accordingly, the preamble index 911 may indicate a total of 64 random access preambles. For example, the TA 913 corresponding to a preamble index may include a determined TA value for the preamble index 911 of the first detected preamble. For example, the TA 913 may have a field length of 12 bits. For example, the detected energy 915 may include a value of energy detected for the first detected preamble. For example, the detected energy 915 may have a field length of 22 bits. For example, the energy may include at least one of power, a signal to noise ratio (SNR), a received signal strength indicator (RSSI), or a reference signal received power (RSRP). The value of the detected energy 915 may include an absolute value of the energy. According to an embodiment, a reserved bit 917 included in the detection result 910 may be used to indicate a type of the detected energy 915. For example, the type may include power, a signal to noise ratio (SNR), a received signal strength indicator (RSSI), or a reference signal received power (RSRP).

In addition, according to an embodiment, the detection result 920 may include information on a second detected preamble among the detected preambles. For example, the detection result 920 may include a preamble index 921, a TA 923 corresponding to a preamble index, and detected energy 925.

For example, the preamble index 921 may include an index indicating the second detected preamble among the detected preambles. For example, the preamble index 921 may have a field length of 6 bits. Accordingly, the preamble index 921 may indicate a total of 64 random access preambles. For example, the TA 923 corresponding to a preamble index may include a determined TA value for the preamble index 921 of the second detected preamble. For example, the TA 923 may have a field length of 12 bits. For example, the detected energy 925 may include a value of energy detected for the second detected preamble. For example, the detected energy 925 may have a field length of 22 bits. For example, the energy may include at least one of power, a signal to noise ratio (SNR), a received signal strength indicator (RSSI), or a reference signal received power (RSRP). The value of the detected energy 925 may include an absolute value of the energy. According to an embodiment, a reserved bit 927 included in the detection result 920 may be used to indicate a type of the detected energy 925. For example, the type may include power, a signal to noise ratio (SNR), a received signal strength indicator (RSSI), or a reference signal received power (RSRP).

In addition, according to an embodiment, the detection result 930 may include information on an m-th detected preamble among the detected preambles. For example, the detection result 930 may include a preamble index for the m-th detected preamble, a TA corresponding to a preamble index, and detected energy. As for the related content, contents of the detection result 910 or the detection result 920 may be applied substantially the same.

According to an embodiment, the user plane message 900 may include a number of PRBs 905 corresponding to a section ID 904. For example, the number of PRBs 905 may include information of PRBs allocated for the IQ data. According to an embodiment, the user plane message 900 including the detection result may use the number of PRBs 905 for indicating the number of detected preambles, instead of the number of PRBs 905 for information of the PRBs. For example, the use of the extension type A within the designated section type may be identified based on the section ID 904 of the user plane message 900. For example, in a case that a section type and an extension type of a control plane message having a section ID corresponding to the section ID 904 of the user plane message 900 are the designated section type and the extension type A, the RU 220 may identify that the extension type A is used within the designated section type.

Referring to the above description, the user plane message 900 may include a detection result for each section ID. For example, the user plane message 900 may include detection results 910, 920, and 930 for the section ID 902, and detection results 940 for the section ID 904. The description regarding the detection results 910, 920, and 930 may be substantially identically applied to the description regarding the detection results 940.

FIGS. 9C and 9D illustrate an example of a user plane message 950 including the detection result of the random access preamble. For convenience of explanation, the user plane message 950 is illustrated separately in FIGS. 9C and 9D, but the user plane messages 950 of FIGS. 9C and 9D may indicate an example of one user plane message. The user plane message 950 including the detection result may be included in an uplink message transmitted from the RU 220 to the DU 210. For example, the RU 220 may perform the detection for the random access preamble and may generate the detection result. For example, the RU 220 may provide (or transmit), to the DU 210, the user plane message 950 including the detection result.

Referring to FIGS. 9C and 9D, the user plane message 950 may be used to provide IQ data generated by the RU 220 to the DU 210. At this time, the user plane message 950 may include the detection result instead of information for transmitting the IQ data. For example, since the detection result for the random access preamble is not IQ data, information associated with PRBs (e.g., a start PRB (startPrbu) and a number of PRBs (numPrbu)) may be unnecessary information for the detection result. Since the detection result is not IQ data, compression for an octet may not be required. Therefore, the user plane message 950 including the detection result instead of the information associated with the PRBs may be transmitted.

Referring to FIGS. 9C and 9D, according to an embodiment, the user plane message 950 may include time header information 951, a number of PRBs 953, and detection results 960, 970, and 980. The description regarding the user plane message 900 of FIGS. 9A and 9B may be substantially identically applied to the description regarding the user plane message 950 of FIGS. 9C and 9D. For example, the time header information 951 may correspond to the time header information 901. For example, the number of PRBs 953 may correspond to the number of PRBs 903.

The detection results 960, 970, and 980 included in the user plane message 950 of FIGS. 9C and 9D may be different from the detection results 910, 920, and 930 included in the user plane message 900 of FIGS. 9A and 9B. For example, the user plane message 900 of FIGS. 9A and 9B may be transmitted in response to a case that the 1R report configuration (e.g., the 1R report configuration 606 of FIG. 6A, the 1R report configuration 656 of FIG. 6B, or the 1R report configuration 706 of FIG. 7) included in the extension type A (e.g., the extension type 600 of FIG. 6A, the extension type 650 of FIG. 6B, or the extension type 700 of FIG. 7) is 0. In contrast, the user plane message 950 of FIGS. 9C and 9D may be transmitted in response to a case that the 1R report configuration (e.g., the 1R report configuration 606 of FIG. 6A, the 1R report configuration 656 of FIG. 6B, or the 1R report configuration 706 of FIG. 7) included in the extension type A (e.g., the extension type 600 of FIG. 6A, the extension type 650 of FIG. 6B, or the extension type 700 of FIG. 7) is 1.

According to an embodiment, the detection result 960 may include information on a first detected preamble among the detected preambles. For example, the detection result 960 may include a preamble index 961, a TA 963 corresponding to a preamble index, detected energy 965, and an eAxCID 967.

For example, the preamble index 961 may include an index indicating the first detected preamble among the detected preambles. For example, the preamble index 961 may have a field length of 6 bits. Accordingly, the preamble index 961 may indicate a total of 64 random access preambles. For example, the TA 963 corresponding to a preamble index may include a determined TA value for the preamble index 961 of the first detected preamble. For example, the TA 963 may have a field length of 12 bits. For example, the detected energy 965 may include a value of the energy detected for the first detected preamble. For example, the detected energy 965 may have a field length of 22 bits. For example, the energy may include at least one of power, a signal to noise ratio (SNR), a received signal strength indicator (RSSI), or a reference signal received power (RSRP). The value of the detected energy 965 may include an absolute value of the energy. According to an embodiment, a reserved bit 967 included in the detection result 960 may be used to indicate a type of the detected energy 965. For example, the type may include power, a signal to noise ratio (SNR), a received signal strength indicator (RSSI), or a reference signal received power (RSRP). For example, the eAxCID 967 may have a field length of 16 bits. For example, the user plane message 950 may include the eAxCID 967 of a reception path having the highest energy among the reception paths, in a case that the 1R report configuration is 1 and the detected preamble for each of the reception paths configured between the RU 220 and the DU 210 has the same index (e.g., the first detected preamble).

According to an embodiment, the detection result 970 may include information on a second detected preamble among the detected preambles. For example, the detection result 970 may include a preamble index 971, a TA 973 corresponding to a preamble index, detected energy 975, and an eAxCID 977.

For example, the preamble index 971 may include an index indicating the second detected preamble among the detected preambles. For example, the preamble index 971 may have a field length of 6 bits. Accordingly, the preamble index 971 may indicate a total of 64 random access preambles. For example, the TA 973 corresponding to a preamble index may include a determined TA value for the preamble index 971 of the second detected preamble. For example, the TA 973 may have a field length of 12 bits. For example, the detected energy 975 may include a value of the detected energy for the second detected preamble. For example, the detected energy 975 may have a field length of 22 bits. For example, the energy may include at least one of power, a signal to noise ratio (SNR), a received signal strength indicator (RSSI), or a reference signal received power (RSRP). The value of the detected energy 975 may include an absolute value of the energy. According to an embodiment, a reserved bit 977 included in the detection result 970 may be used to indicate a type of the detected energy 975. For example, the type may include power, a signal to noise ratio (SNR), a received signal strength indicator (RSSI), or a reference signal received power (RSRP). For example, the eAxCID 977 may have a field length of 16 bits. For example, the user plane message 950 may include the eAxCID 977 of a reception path having the highest energy among the reception paths, in a case that the 1R report configuration is 1 and the detected preamble for each of the reception paths configured between the RU 220 and the DU 210 has the same index (e.g., the second detected preamble).

According to an embodiment, the detection result 980 may include information on an m-th detected preamble among the detected preambles. For example, the detection result 980 may include a preamble index for the m-th detected preamble, a TA corresponding to a preamble index, and detected energy. As for the related content, contents of the detection result 960 or the detection result 970 may be substantially identically applied.

According to an embodiment, the user plane message 950 may include a number of PRBs 955 corresponding to a section ID 954. For example, the number of PRBs 955 may include information of PRB allocated for the IQ data. According to an embodiment, the user plane message 950 including the detection result may use the number of PRBs 955 for indicating the number of the detected preambles, rather than the number of PRBs 955 for information of PRB. For example, the use of the extension type A within the designated section type may be identified based on the section ID 954 of the user plane message 950. For example, in a case that a section type and an extension type of a control plane message having a section ID corresponding to the section ID 954 of the user plane message 950 are the designated section type and the extension type A, the RU 220 may identify that the extension type A is used within the designated section type.

Referring to the above description, the user plane message 950 may include detection results for each section ID. For example, the user plane message 950 may include detection results 960, 970, and 980 for the section ID 952, and detection results 990 for the section ID 954. The description regarding the detection results 990 may be substantially identically applied to the description regarding the detection results 960, 970, and 980.

Referring to FIGS. 9A to 9D, examples of the user plane message 900 not including the eAxCID and the user plane message 950 including the eAxCID, based on a value of the 1R report configuration, are illustrated, but the embodiments of the present disclosure are not limited thereto. For example, the eAxCID may not be included in a detection result associated with a specific section ID of the user plane message, and may be included in a detection result associated with a section ID different from the specific section ID of the user plane message. In other words, the user plane message 900 of FIGS. 9A and 9B and the user plane message 950 of FIGS. 9C and 9D may be combined.

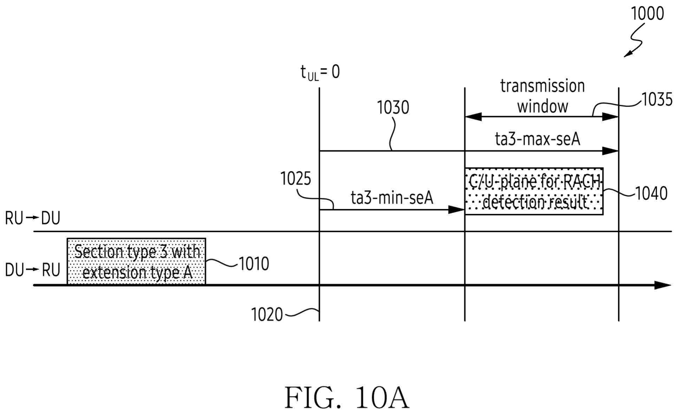

FIG. 10A illustrates an example of a transmission window for an uplink message.

FIG. 10A illustrates an example 1000 of a transmission window for an uplink message 1040 including the detection result. For example, the uplink message 1040 may include the control plane message 800 of FIG. 8A, the control plane message 850 of FIG. 8B, the user plane message 900 of FIGS. 9A and 9B, or the user plane message 950 of FIGS. 9C and 9D.

According to an embodiment, the RU 220 may obtain (or receive) a control plane message from the DU 210. For example, the RU 220 may obtain the control plane message from the DU 210 within a time interval 1010. For example, the control plane message obtained within the time interval 1010 may include the extension type A and the designated section type of FIGS. 6A to 7.

According to an embodiment, the RU 220 may transmit (or provide), to the DU 210, the uplink message 1040 within a transmission window 1035. For example, the RU 220 may transmit, to the DU 210, the uplink message 1040 including the detection result within the transmission window 1035. For example, the transmission window 1035 may indicate a time interval between a minimum requirement timing 1025 and a maximum requirement timing 1030. The transmission window 1035 may be referred to as a transmission interval, transmission duration, transmission gap, or transmission period. The uplink message 1040 may include information (or a detection result) on a random access preamble detected based on the control plane message. For example, the transmission window 1035 may be identified based on a reference timing 1020, the minimum requirement timing 1025, and the maximum requirement timing 1030. The minimum requirement timing 1025 may be referred to as a minimum time or a minimum timing. The maximum requirement timing 1030 may be referred to as a maximum time or a maximum timing.

According to an embodiment, a reference timing 1020 may be identified based on the control plane message obtained within the time interval 1010. For example, the reference timing 1020 may be indicated by a start symbol identifier (ID) for obtaining a user plane message associated with PRACH. For example, the start symbol identifier may be included in the control plane message obtained within the time interval 1010. At this time, the control plane message may include the designated section type and the extension type A. Alternatively, for example, the reference timing 1020 may be indicated as the earliest time at which the uplink message is received based on an antenna port of the DU 210. For example, the reference timing may be referred to as a reference timing or a reference point.

According to an embodiment, the minimum requirement timing 1025 and the maximum requirement timing 1030 may be identified based on the control plane message including the extension type A indicating the reference timing 1020. For example, the minimum requirement timing 1025 may be configured as a minimum requirement timing for transmitting the detection result. Alternatively, for example, the maximum requirement timing 1030 may be configured as a maximum requirement timing for transmitting the detection result.

According to an embodiment, the minimum requirement timing 1025 and the maximum requirement timing 1030 may be defined through a user plane configuration module (or YANG module). For example, within the user plane configuration module (or YANG module), the minimum requirement timing 1025 may be defined as ta3_min_seA, and the maximum requirement timing 1030 may be defined as ta3_max_seA. Unlike the minimum requirement timing 1025 and the maximum requirement timing 1030 for transmitting the detection result, a minimum requirement timing and a maximum requirement timing for other uplink transmission may be defined as ta3_min and ta3_max, respectively. According to an embodiment, the transmission window 1035 for the uplink message 1040 may be formed longer than a transmission window (or delay) between the minimum requirement timing and the maximum requirement timing for the other uplink transmission. This may be because the RU 220 performs detection of a random access preamble based on the control plane message obtained within the time interval 1010, generates the uplink message 1040, and then performs transmission of the uplink message 1040.

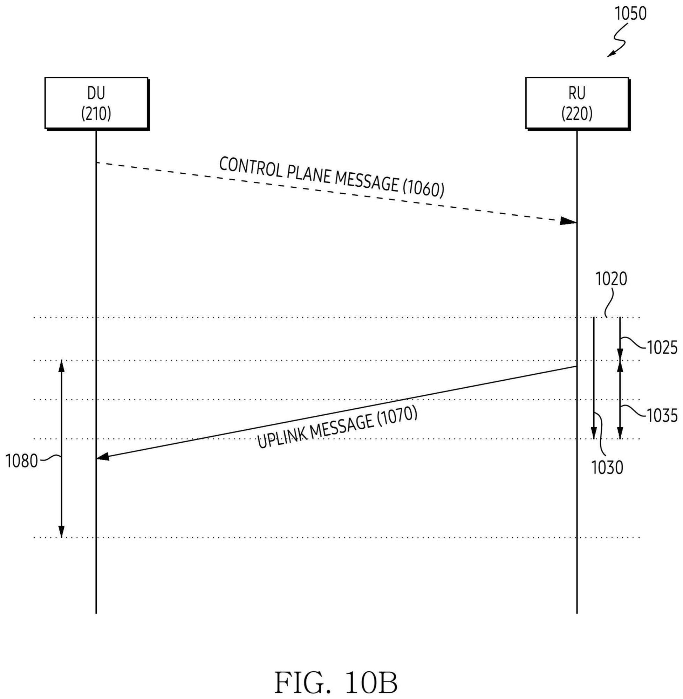

FIG. 10B illustrates an example of a signal flow for transmitting an uplink message.

FIG. 10B illustrates an example 1050 of a signal flow between the DU 210 and the RU 220 with respect to the example 1000 of FIG. 10A.

Referring to the example 1050, in operation 1060, the DU 210 may transmit (or provide) a control plane message to the RU 220. For example, the RU 220 may receive (or obtain) the control plane message from the DU 210. For example, the control plane message obtained within the time interval 1010 may include the extension type A and the designated section type of FIGS. 6A to 7.

Referring to the example 1050, in operation 1070, the RU 220 may transmit an uplink message to the DU 210. For example, the uplink message may include the control plane message 800 of FIG. 8A, the control plane message 850 of FIG. 8B, the user plane message 900 of FIGS. 9A and 9B, or the user plane message 950 of FIGS. 9C and 9D. At this time, in a case that the uplink message is the control plane message 800 (or the control plane message 850), a section type associated with the uplink message may be the section type B. In addition, in a case that the uplink message is the user plane message 900 (or the user plane message 950), a section ID of the user plane message 900 (or the user plane message 950) may correspond to a section ID of the control plane message provided to the RU 220 in operation 1060.

Referring to the example 1050, the RU 220 may transmit the uplink message within the transmission window 1035. For example, the transmission window 1035 may be identified based on the reference timing 1020, the minimum requirement timing 1025, and the maximum requirement timing 1030. For example, the reference timing 1020 may indicate a symbol indicated by the control plane message.

Referring to the example 1050, the DU 210 may receive the uplink message within a reception window 1080. At this time, the reception window 1080 may be identified based on the transmission window 1035. For example, the reception window 1080 may be identified based on the transmission window 1035 and a fronthaul delay. For example, the fronthaul delay may indicate a time delayed while transmitting a message within a fronthaul between the DU 210 and the RU 220.

Although not illustrated in FIG. 10B, according to an embodiment, the RU 220 may receive a message 1 from the terminal 120 during a time interval between operation 1060 and operation 1070. For example, the RU 220 may perform a detection for a random access preamble based on the received message 1 and the control plane message (or the extension type A). The RU 220 may provide (or transmit), to the DU 210, the uplink message including a result of the detection in operation 1070. However, the embodiment of the present disclosure is not limited thereto. For example, the RU 220 may receive the message 1 from the terminal 120 before operation 1060 and may perform the detection for the received message 1 based on the control plane message received in operation 1060.

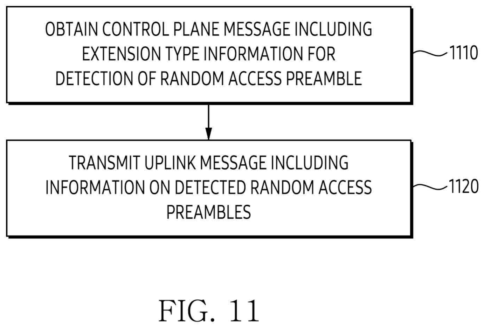

FIG. 11 illustrates an example of an operation flow for a method of reporting detection result based on extension type information for detection of a random access preamble.

At least a portion of a method of FIG. 11 may be performed by the RU 220 of FIG. 3B. For example, at least a portion of the method may be controlled by the processor 380 of the RU 220. In the following embodiment, each operation may be performed sequentially, but is not necessarily performed sequentially. For example, the sequence of each operation may be changed, and at least two operations may be performed in parallel.

In operation 1110, the RU 220 may obtain a control plane message including extension type information for a detection of a random access preamble. For example, the RU 220 may receive, from the DU 210, the control plane message including the extension type information for the detection.

According to an embodiment, the extension type information may include a common parameter. For example, the common parameter may include an extension flag (ef), an extension type (extType), and an extension length (extLen). As for the related content, contents of FIGS. 6A to 7 may be substantially identically applied.

According to an embodiment, the extension type may include parameters for the detection of the random access preamble. For example, the parameters for the detection may include a 1R report configuration, a restricted set configuration, a root sequence index, the number of cyclic shifts, indication information on detection random access preambles, and the maximum number of reporting random access preambles. As for the related content, contents of FIGS. 6A to 7 may be substantially identically applied.

According to an embodiment, the indication information may include a start number of the detection random access preambles and an end number of the detection random access preambles. For example, the start number may include an index (or start index) of the detection random access preambles. For example, the end number may include an index (or start index) of the detection random access preambles.

According to an embodiment, the indication information may further include a start number of the detection random access preambles and a length of the detection random access preambles. For example, the length may include the number of the detection random access preambles consecutive from the start number.

According to an embodiment, the indication information may include a bitmap. For example, the bitmap for indicating the detection random access preambles may indicate the preambles targeted for detection among a maximum number (e.g., 64) of configurable random access preambles. For example, the bitmap may have a field length of 64 bits.

According to an embodiment, the maximum number may indicate the number of random access preambles targeted for reporting. For example, the maximum number may indicate a maximum number of reporting random access preambles among the detection random access preambles.

According to an embodiment, the extension type may further include additional parameters. For example, the extension type may include at least one of a maximum TA threshold, a detection energy threshold, or whitening information for interference cancellation. For example, the maximum TA threshold may indicate a threshold for a TA value corresponding to a random access preamble. For example, the RU 220 may detect and report a random access having a TA less than or equal to the maximum TA threshold value. For example, the detection energy threshold may indicate a threshold for energy of a random access preamble. For example, the RU 220 may detect and report a random access having an energy equal to or smaller than the detection energy threshold. For example, the whitening information may be used to indicate whether to perform the whitening filtering for the interference cancellation. For example, in a case that a value of the whitening information is 0, the RU 220 may perform the whitening filtering. In contrast, in a case that a value of the whitening information is 1, the RU 220 may not perform (or may omit) the whitening filtering.

According to an embodiment, the extension type may be used in concatenation with a designated section type. For example, the designated section type may include a section type 3 associated with a PRACH. However, the embodiments of the present disclosure are not limited thereto. For example, the extension type 700 may also be used in concatenation with a section type 0 for indicating an uplink resource.

In addition, according to an embodiment, the extension type may be used in concatenation with a designated section type and another extension type. For example, the extension type may be used in concatenation with a section type 3 and an extension type 10. The extension type 10 may be used to indicate a predefined beam (e.g., beam ID) for measuring a random access preamble. Alternatively, for example, the extension type 650 may be used in concatenation with the section type 3 and an extension type 1. The extension type 1 may be used to indicate an undefined beam (e.g., beamforming weight value) for measuring a random access preamble.

As described above, a section extension (or extension type) capable of being supported according to a section type may be defined through a user plane configuration module (or YANG module). The module may define the section extension capable of being supported according to a section type as illustrated in Table 1 above. Referring to Table 1 described above, in relation to the extension type, a value (uint8) of supported-section-extensions may indicate a value A of the extType. In this case, a value (uint8) of the section-type may indicate 3 (i.e., section type 3). However, as described above, the value of the extType and a value of section-type corresponding thereto are merely exemplary, and the embodiments of the present disclosure are not limited thereto.

Although not illustrated in FIG. 11, according to an embodiment, the RU 220 may receive a message 1 from the terminal 120 after receiving the control plane message. For example, the RU 220 may perform a detection for a random access preamble based on the received message 1 and the control plane message (or the extension type A). In other words, the RU 220 may identify detected random access preambles. However, the embodiments of the present disclosure are not limited thereto.

In operation 1120, the RU 220 may transmit an uplink message including information on detected random access preambles. For example, the RU 220 may provide, to the DU 210, the uplink message including the information on the detected random access preambles. For example, the uplink message may include a control plane message or a user plane message.

According to an embodiment, in a case that the uplink message includes the control plane message (e.g., the control plane message 800 of FIG. 8A or the control plane message 850 of FIG. 8B), the uplink message may include time header information, section type information, a number of detected preambles, and detection results. As for the related content, contents of FIGS. 8A and 8B may be substantially identically applied.

According to an embodiment, the section type information may be used to indicate the section type B. The section type B may be used with respect to an extension type A (e.g., the extension type 600 of FIG. 6A, the extension type 650 of FIG. 6B, or the extension type 700 of FIG. 7). For example, the section type B may be used as a response to the extension type A and a designated section type (e.g., section type 3) concatenated therewith.

According to an embodiment, the number of the detected preambles may indicate a number of the detected random access preambles among the random access preambles received by the RU 220. For example, the detected random access preambles may indicate a preamble identified based on the detection among the random access preambles received from the terminal 120. For example, the number of the detected preambles may be equal to or less than the maximum number included in the extension type A. In other words, the number of the detected random access preambles may be less than the number of the reporting random access preambles.

According to an embodiment, the number of the detected preambles may be associated with a number of the detection results. For example, the number of the detection results may correspond to the number of the detected preambles.

According to an embodiment, a first detection result among the detection results may include information on a first detected preamble among the detected preambles. For example, the first detection result may include a first preamble index, a first TA corresponding to the first preamble index, and a first detected energy.

For example, the first preamble index may include an index indicating the first detected preamble among the detected preambles. For example, the first preamble index may have a field length of 6 bits. Accordingly, the first preamble index may indicate a total of 64 random access preambles. For example, the first TA corresponding to the preamble index may include a determined TA for the first preamble index of the first detected preamble. For example, the first TA may have a field length of 12 bits. For example, the first detected energy may include a value of energy detected for the first detected preamble. For example, the first detected energy may have a field length of 16 bits. For example, the energy may include at least one of power, a signal to noise ratio (SNR), a received signal strength indicator (RSSI), or a reference signal received power (RSRP). The value of the first detected energy may include an absolute value of the energy.

According to an embodiment, a reserved bit included in the first detection result may be used to indicate a type of the first detected energy. For example, the type may include power, a signal to noise ratio (SNR), a received signal strength indicator (RSSI), or a reference signal received power (RSRP).

Also, according to an embodiment, a second detection result among the detection results may include information on a second detected preamble among the detected preambles. For example, the second detection result may include a second preamble index, a second TA corresponding to the second preamble index, and the second detected energy.

According to an embodiment, in a case that the uplink message includes the user plane message (e.g., the user plane message 900 of FIGS. 9A and 9B or the user plane message 950 of FIGS. 9C and 9D), the uplink message may include time header information, section type information, a number of detected preambles, and detection results. As for the related content, contents of FIGS. 9A and 9B or FIGS. 9C and 9D may be substantially identically applied.

According to an embodiment, the user plane message may include time header information, a number of PRBs, and detection results.

According to an embodiment, the number of PRBs may include information of PRBs allocated for the IQ data. According to an embodiment, the user plane message may use the number of PRBs for indicating the number of the detected preambles, rather than the number of PRBs for the information of the PRBs. For example, in a case that the extension type A is used within the designated section type (e.g., section type 3), the number of PRBs may indicate the number of the detected preambles instead of the information of the PRBs. For example, the use of the extension type A within the designated section type may be identified based on a section ID of the user plane message. For example, in a case that a section type and an extension type of a control plane message having a section ID corresponding to the section ID of the user plane message are the designated section type and the extension type A, the RU 220 may identify that the extension type A is used within the designated section type.

According to an embodiment, the number of the detected preambles may be associated with the number of the detection results. For example, the number of the detection results may correspond to the number of the detected preambles.

According to an embodiment, a first detection result among the detection results of the user plane message may include information on a first detected preamble among the detected preambles. For example, the first detection result may include a first preamble index, a first TA corresponding to the first preamble index, and a first detected energy.

For example, the first preamble index may include an index indicating the first detected preamble among the detected preambles. For example, the first preamble index may have a field length of 6 bits. Accordingly, the first preamble index may indicate a total of 64 random access preambles. For example, the first TA may include a determined TA for the first preamble index of the first detected preamble. For example, the first TA may have a field length of 12 bits. For example, the first detected energy may include a value of energy detected for the first detected preamble. For example, the first detected energy may have a field length of 22 bits. For example, the energy may include at least one of power, a signal-to-noise ratio (SNR), a received signal strength indicator (RSSI), or a reference signal received power (RSRP). The first detected energy may include an absolute value of the energy.

According to an embodiment, a reserved bit included in the first detection result may be used to indicate a type of the first detected energy. For example, the type may include power, a signal-to-noise ratio (SNR), a received signal strength indicator (RSSI), or a reference signal received power (RSRP).

In addition, according to an embodiment, a second detection result among the detection results of the user plane message may include information on a second detected preamble among the detected preambles. For example, the detection result may include a second preamble index, a second TA corresponding to the second preamble index, and a second detected energy.

According to an embodiment, the user plane message may include a number of PRBs corresponding to another section ID different from the section ID. For example, the number of other PRB may include information on PRBs allocated for the IQ data. Referring to the above description, the user plane message may include a detection result for each section ID. For example, the user plane message may include detection results for the section ID and detection results for the other section ID.

According to an embodiment, the RU 220 may transmit (or provide), to the DU 210, the uplink message within a transmission window. For example, the RU 220 may transmit, to the DU 210, the uplink message including the detection result within the transmission window. For example, the transmission window may indicate a time interval between a minimum requirement timing and a maximum requirement timing.

According to an embodiment, the transmission window may be identified based on a reference timing, the minimum requirement timing, and the maximum requirement timing. The reference timing may be identified based on the control plane message. At this time, the control plane message may include the designated section type and the extension type A. For example, the reference timing may be indicated by a start symbol identifier (ID) for obtaining a user plane message associated with a PRACH.

According to an embodiment, the minimum requirement timing and the maximum requirement timing may be defined through a user plane configuration module (or YANG module). For example, in the user plane configuration module (or the YANG module), the minimum requirement timing may be defined as ta3_min_seA, and the maximum requirement timing may be defined as ta3_max_seA. Unlike the minimum requirement timing and the maximum requirement timing for transmitting the detection result, a minimum requirement timing and a maximum requirement timing for other uplink transmission may be defined as ta3_min and ta3_max, respectively. According to an embodiment, the transmission window for the uplink message may be formed to be longer than a transmission window (or delay) between the minimum requirement timing and the maximum requirement timing for the other uplink transmission. This may be because the RU 220 performs detection of a random access preamble based on the control plane message, generates the uplink message, and then performs transmission of the uplink message.

Referring to FIGS. 1 to 11, a device and a method according to the embodiments of the present disclosure may reduce resource usage (or capacity) of a fronthaul interface as the RU 220 provides information on a detected random access preamble to the DU 210. In addition, the device and the method according to the embodiments of the present disclosure may reduce a processing time of the DU 210 and perform a random access procedure more quickly.

In embodiments, a radio unit (RU) may comprise a transceiver. The RU may comprise a processor. The RU may comprise memory. Instructions stored in the memory, when executed by the processor, may cause the RU to obtain, from a distributed unit (DU), a control plane message including extension type information for detection of a random access preamble. The instructions stored in the memory, when executed by the processor, may cause the RU to transmit, to the DU, an uplink message including information on random access preambles. The random access preambles may be detected based on the extension type information. The extension type information may include indication information for detection random access preambles and information on a maximum number of reporting random access preambles.

According to an embodiment, the instructions stored in the memory, when executed by the processor, may further cause the device to, receive, via the transceiver, signals transmitted from a first user equipment (UE). The instructions stored in the memory, when executed by the processor, may further cause the device to detect a first random access preamble associated with the first UE based on the signals received from the first UE and the extension type information. The instructions stored in the memory, when executed by the processor, may further cause the device to receive, via the transceiver, signals transmitted from a second user equipment (UE). The instructions stored in the memory, when executed by the processor, may further cause the device to detect a second random access preamble associated with the second UE based on the signals received from the second UE and the extension type information. The information on the random access preambles included in the uplink message, transmitted to the DU, may be generated based on the first random access preamble and the second random access preamble.

According to an embodiment, the extension type information may include, an extension flag, an index of the extension type information, a length of the extension type information, a number of cyclic shift indicated by zero correlation zone (ZCZ) configuration, a root sequence index, and restricted set configuration.

According to an embodiment, the extension type information may further include at least one of a maximum timing advance (TA) threshold, a detection energy threshold, or whitening information for interference cancellation.

According to an embodiment, the indication information may include a start number of the detection random access preambles and an end number of the detection random access preambles. The information on the maximum number may indicate a maximum number of the reporting random access preambles according to ascending order of detected energy with respect to each of the detection random access preambles. A number of the random access preambles may be less than or equal to the maximum number.

According to an embodiment, the indication information may include a bitmap for indicating the detection random access preambles. The information on the maximum number may indicate a maximum number of the reporting random access preambles according to ascending order of detected energy with respect to each of the detection random access preambles. A number of the random access preambles may be less than or equal to the maximum number.

According to an embodiment, the control plane message may be associated with a section type 3.

According to an embodiment, the uplink message may comprise an uplink control plane message. The uplink control plane message may include time resource information in which the random access preambles are transmitted, information indicating a number of the random access preambles, and detection result with respect to each of the random access preambles. The detection result may include an index of a random access preamble, a timing advance (TA) corresponding to the index, and information on detected energy.

According to an embodiment, the uplink message may comprise an uplink user plane message. The uplink user plane message may include time resource information in which the random access preambles are transmitted, information on a number of physical resource block (PRB) for indicating a number of the random access preambles, and detection result with respect to each of the random access preambles. The detection result may include an index of a random access preamble, a TA corresponding to the index, and information on detected energy.

According to an embodiment, the uplink message may further include information indicating a reception path in a case that the control plane message includes 1R(reception path) report configuration and a value of the 1R report configuration indicates transmitting the information on the random access preambles through the reception path.

According to an embodiment, the instructions stored in the memory, when executed by the processor, may further cause the device to transmit the uplink message including the information on the random access preambles within a transmission window. The transmission window may be identified based on a minimum requirement timing for transmitting the uplink message configured with respect to a reference timing and a maximum requirement timing for transmitting the uplink message configured with respect to the reference timing. The reference timing may be indicated based on a start symbol identity included in the control plane message.

In embodiments, a method performed by a radio unit (RU) may comprise obtaining, from a distributed unit (DU), a control plane message including extension type information for detection of a random access preamble. The method may comprise transmitting, to the DU, an uplink message including information on random access preambles. The random access preambles may be detected based on the extension type information. The extension type information may include indication information for detection random access preambles and information on a maximum number of reporting random access preambles.

According to an embodiment, the method may further comprise receiving, via the transceiver, signals transmitted from a first user equipment (UE). The method may further comprise detecting a first random access preamble associated with the first UE based on the signals received from the first UE and the extension type information. The method may further comprise receiving, via the transceiver, signals transmitted from a second user equipment (UE). The method may further comprise detecting a second random access preamble associated with the second UE based on the signals received from the second UE and the extension type information. The information on the random access preambles included in the uplink message, transmitted to the DU, may be generated based on the first random access preamble and the second random access preamble.

According to an embodiment, the extension type information may include, an extension flag, an index of the extension type information, a length of the extension type information, a number of cyclic shift indicated by zero correlation zone (ZCZ) configuration, a root sequence index, and restricted set configuration.

According to an embodiment, the extension type information may further include at least one of a maximum timing advance (TA) threshold, a detection energy threshold, or whitening information for interference cancellation.

According to an embodiment, the indication information may include a start number of the detection random access preambles and an end number of the detection random access preambles. The information on the maximum number may indicate a maximum number of the reporting random access preambles according to ascending order of detected energy with respect to each of the detection random access preambles. A number of the random access preambles may be less than or equal to the maximum number.

According to an embodiment, the indication information may include a bitmap for indicating the detection random access preambles. The information on the maximum number may indicate a maximum number of the reporting random access preambles according to ascending order of detected energy with respect to each of the detection random access preambles. A number of the random access preambles may be less than or equal to the maximum number.

According to an embodiment, the control plane message may be associated with a section type 3.

According to an embodiment, the uplink message may comprise an uplink control plane message. The uplink control plane message may include time resource information in which the random access preambles are transmitted, information indicating a number of the random access preambles, and detection result with respect to each of the random access preambles. The detection result may include an index of a random access preamble, a timing advance (TA) corresponding to the index, and information on detected energy.

According to an embodiment, the uplink message may comprise an uplink user plane message. The uplink user plane message may include time resource information in which the random access preambles are transmitted, information on a number of physical resource block (PRB) for indicating a number of the random access preambles, and detection result with respect to each of the random access preambles. The detection result may include an index of a random access preamble, a TA corresponding to the index, and information on detected energy.

According to an embodiment, the uplink message may further include information indicating a reception path in a case that the control plane message includes 1R(reception path) report configuration and a value of the 1R report configuration indicates transmitting the information on the random access preambles through the reception path.

According to an embodiment, the method may further comprise transmitting the uplink message including the information on the random access preambles within a transmission window. The transmission window may be identified based on a minimum requirement timing for transmitting the uplink message configured with respect to a reference timing and a maximum requirement timing for transmitting the uplink message configured with respect to the reference timing. The reference timing may be indicated based on a start symbol identity included in the control plane message.

In embodiments, a non-transitory computer-readable storage medium, when executed by at least one processor of a device for a radio unit (RU) comprising a transceiver, may store one or more programs including instructions that cause the RU to obtain, from a distributed unit (DU), a control plane message including extension type information for detection of a random access preamble. The non-transitory computer-readable storage medium, when executed by the at least one processor, may store one or more programs including instructions that cause the RU to transmit, to the DU, an uplink message including information on random access preambles, The random access preambles may be detected based on the extension type information. The extension type information may include indication information for detection random access preambles and information on a maximum number of reporting random access preambles.

In embodiments, a distributed unit (DU) may comprise a transceiver. The DU may comprise a processor. The DU may comprise memory. Instructions stored in the memory, when executed by the processor, may cause the DU to transmit, to a radio unit (RU), a control plane message including extension type information for detection of a random access preamble. The instructions stored in the memory, when executed by the processor, may cause the DU to obtain, from the RU, an uplink message including information on random access preambles. The random access preambles may be detected, based on the extension type information. The extension type information may include indication information for detection random access preambles and information on a maximum number of reporting random access preambles.

In embodiments, a method performed by a distributed unit (DU) may comprise transmitting, to a radio unit (RU), a control plane message including extension type information for detection of a random access preamble. The method may comprise obtaining, from the RU, an uplink message including information on random access preambles. The random access preambles may be detected, based on the extension type information. The extension type information may include indication information for detection random access preambles and information on a maximum number of reporting random access preambles.

In embodiments, a non-transitory computer-readable storage medium, when executed by a processor of a distributed unit (DU) comprising a transceiver, may store one or more programs including instructions that cause the RU to transmit, to a radio unit (RU), a control plane message including extension type information for detection of a random access preamble. The non-transitory computer-readable storage medium, when executed by the processor, may store one or more programs including instructions that cause the RU to obtain, from the RU, an uplink message including information on random access preambles. The random access preambles may be detected, by the RU, based on the extension type information. The extension type information may include indication information for detection random access preambles and information on a maximum number of reporting random access preambles.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a radio unit (RU) comprising:
a transceiver;
at least one processor comprising processing circuitry; and
memory, storing instructions, comprising one or more storage media that, when executed individually or collectively by the at least one processor, cause the device to:
obtain, from a distributed unit (DU), a control plane message including extension type information for detection of a random access preamble; and
transmit, to the DU, an uplink message including information on random access preambles, wherein the random access preambles are detected based on the extension type information,
wherein the extension type information includes indication information for detection random access preambles and information on a maximum number of reporting random access preambles.

2. The device of claim 1, wherein the instructions, when executed individually or collectively by the at least one processor, further cause the device to:
receive, via the transceiver, signals transmitted from a first user equipment (UE);
detect a first random access preamble associated with the first UE based on the signals received from the first UE and the extension type information;
receive, via the transceiver, signals transmitted from a second user equipment (UE); and
detect a second random access preamble associated with the second UE based on the signals received from the second UE and the extension type information,
wherein the information on the random access preambles included in the uplink message, transmitted to the DU, is generated based on the first random access preamble and the second random access preamble.

3. The device of claim 1,
wherein the extension type information includes, an extension flag, an index of the extension type information, a length of the extension type information, a number of cyclic shift indicated by zero correlation zone (ZCZ) configuration, a root sequence index, and restricted set configuration.

4. The device of claim 3,
wherein the extension type information further includes at least one of a maximum timing advance (TA) threshold, a detection energy threshold, or whitening information for interference cancellation.

5. The device of claim 1,
wherein the indication information includes a start number of the detection random access preambles and an end number of the detection random access preambles,
wherein the information on the maximum number indicates a maximum number of the reporting random access preambles according to ascending order of detected energy with respect to each of the detection random access preambles, and
wherein a number of the random access preambles is less than or equal to the maximum number.

6. The device of claim 1,
wherein the indication information includes a bitmap for indicating the detection random access preambles,
wherein the information on the maximum number indicates a maximum number of the reporting random access preambles according to ascending order of detected energy with respect to each of the detection random access preambles, and
wherein a number of the random access preambles is less than or equal to the maximum number.

7. The device of claim 1,
wherein the control plane message is associated with a section type 3.

8. The device of claim 1,
wherein the uplink message comprises an uplink control plane message,
wherein the uplink control plane message includes:
time resource information in which the random access preambles are transmitted,
information indicating a number of the random access preambles, and
detection result with respect to each of the random access preambles,
wherein the detection result includes an index of a random access preamble, a timing advance (TA) corresponding to the index, and information on detected energy.

9. The device of claim 1,
wherein the uplink message comprises an uplink user plane message,
wherein the uplink user plane message includes:
time resource information in which the random access preambles are transmitted,
information on a number of physical resource block (PRB) for indicating a number of the random access preambles, and
detection result with respect to each of the random access preambles,
wherein the detection result includes an index of a random access preamble, a TA corresponding to the index, and information on detected energy.

10. The device of claim 8,
wherein the uplink message further includes information indicating a reception path in a case that the control plane message includes 1R(reception path) report configuration and a value of the 1R report configuration indicates transmitting the information on the random access preambles through the reception path.

11. The device of claim 1,
wherein the instructions, when executed individually or collectively by the at least one processor, further cause the device to:
transmit the uplink message including the information on the random access preambles within a transmission window,
wherein the transmission window is identified based on a minimum requirement timing for transmitting the uplink message configured with respect to a reference timing and a maximum requirement timing for transmitting the uplink message configured with respect to the reference timing,
wherein the reference timing is indicated based on a start symbol identity included in the control plane message.

12. A device of a distributed unit (DU) comprising:
a transceiver;
at least one processor comprising processing circuitry; and
memory, storing instructions, comprising one or more storage media that, when executed individually or collectively by the at least one processor, cause the device to:
transmit, to a radio unit (RU), a control plane message including extension type information for detection of a random access preamble; and
obtain, from the RU, an uplink message including information on random access preambles, wherein the random access preambles are detected, by the RU, based on the extension type information,
wherein the extension type information includes indication information for detection random access preambles and information on a maximum number of reporting random access preambles.

13. A method performed by a radio unit (RU) comprising:
obtaining, from a distributed unit (DU), a control plane message including extension type information for detection of a random access preamble; and
transmitting, to the DU, an uplink message including information on random access preambles, wherein the random access preambles are detected based on the extension type information,
wherein the extension type information includes indication information for detection random access preambles and information on a maximum number of reporting random access preambles.

14. The method of claim 13, further comprising:
receiving signals transmitted from a first user equipment (UE);
detecting a first random access preamble associated with the first UE based on the signals received from the first UE and the extension type information;
receiving signals transmitted from a second user equipment (UE); and
detecting a second random access preamble associated with the second UE based on the signals received from the second UE and the extension type information,
wherein the information on the random access preambles included in the uplink message, transmitted to the DU, is generated based on the first random access preamble and the second random access preamble.

15. A non-transitory computer-readable storage medium, when executed individually or collectively by at least one processor of a radio unit (RU) comprising a transceiver, stores one or more programs including instructions that cause the RU to:
obtain, from a distributed unit (DU), a control plane message including extension type information for detection of a random access preamble; and
transmit, to the DU, an uplink message including information on random access preambles, wherein the random access preambles are detected based on the extension type information,
wherein the extension type information includes indication information for detection random access preambles and information on a maximum number of reporting random access preambles.
